# FASCICULE DE BREVET EUROPEEN

(11) **EP 4 149 773 B1**
(45) Date de publication et mention de la délivrance du brevet: **02.10.2024**
(21) Numéro de dépôt: 21732393.0
(22) Date de dépôt: 22.04.2021
(51) Int. Cl.: B60C 1/00, B60C 11/00, B60C 11/03

(54) **PNEUMATIQUE A ADHERENCE SUR SOL MOUILLE AMELIOREE EN FIN DE VIE**
REIFEN MIT VERBESSERTER GRIFFIGKEIT AM ENDE DER LEBENSDAUER AUF NASSEM BODEN
TYRE WITH IMPROVED END-OF-LIFE GRIP ON WET GROUND

(30) Priorité: 13.05.2020 FR 2004711
(43) Date de publication de la demande: 22.03.2023
(73) Titulaire: COMPAGNIE GENERALE DES ETABLISSEMENTS MICHELIN, 63000 Clermont-Ferrand (FR)
(72) Inventeur: DURAND-GASSELIN, Benoit, 63040 CLERMONT-FERRAND Cedex 9 (FR); FRANCOIS, Marie-Laure, 63040 CLERMONT-FERRAND Cedex 9 (FR); HELLOT, Fabien, 63040 CLERMONT-FERRAND Cedex 9 (FR)
(74) Mandataire: M.F.P. Michelin
(86) Numéro de dépôt international: PCT/FR2021/050698
(87) Numéro de publication internationale: WO 2021/229160

(56) Documents cités:
- EP-A1- 0 558 037
- EP-A1- 2 108 527
- EP-A2- 2 815 893
- WO-A1-2019/066839
- US-A1- 2006 231 181

## Description

La présente invention est relative à un pneumatique pour véhicule de tourisme.

On connait de l'état de la technique un pneumatique vendu sous la marque MICHELIN Primacy 4 de forme sensiblement torique autour d'un axe de révolution sensiblement confondu avec l'axe de rotation du pneumatique. Le pneumatique comprend un sommet, deux flancs, deux bourrelets, chaque flanc reliant chaque bourrelet au sommet. Le pneumatique comprend également une armature de carcasse ancrée dans chaque bourrelet et s'étendant dans chaque flanc et radialement intérieurement au sommet. Le sommet comprend une bande de roulement et une armature de sommet, l'armature de sommet étant agencée radialement à l'intérieur de la bande de roulement.

La bande de roulement comprend des découpures séparant des blocs de sculpture les uns des autres. Les découpures comprennent notamment des rainures et des incisions. Les rainures comprennent des rainures circonférentielles au fond desquelles sont agencées des témoins d'usure. De tels témoins d'usure sont imposés, par exemple par les règlements des Nations Unies R30 et R54, des Etats-Unis d'Amérique FMVSS139 ou encore de la Chine GB97743 et visent à indiquer à l'utilisateur du pneumatique un seuil d'usure réglementaire du pneumatique au-delà duquel il est risqué de rouler, notamment sur sol mouillé. Ainsi, on qualifie ces témoins d'usure de témoins d'usure réglementaires. Chaque témoin d'usure réglementaire est formé par une protubérance s'étendant radialement depuis le fond de la rainure circonférentielle, notamment de depuis le fond de la rainure circonférentielle la plus profonde, radialement vers l'extérieur sur une hauteur radiale sensiblement égale à 1,6 mm. Cette hauteur radiale permet de définir le potentiel d'usure du pneumatique, ici 5,4 mm, comme la hauteur radiale entre, lorsque le pneumatique est à l'état neuf, le point le plus radialement externe du témoin d'usure réglementaire et son projeté sur le sol lors du roulage du pneumatique. En d'autres termes, le potentiel d'usure est égal à la différence de la profondeur de sculpture du pneumatique, ici égale à 7,0 mm à l'état neuf, et la hauteur radiale du témoin d'usure réglementaire, ici égale à 1,6 mm.

La bande de roulement du pneumatique comprend une couche de roulement destinée à entrer en contact avec le sol lors du roulage du pneumatique par l'intermédiaire d'une surface de roulement ainsi qu'une couche de support de la couche de roulement agencée radialement à l'intérieur de la couche de roulement. La couche de roulement comprend un matériau élastomérique de roulement et la couche de support comprend un matériau élastomérique de support différent du matériau élastomérique de roulement. Ainsi, la couche de roulement et la couche de support sont jointives par l'intermédiaire d'une interface décrivant, dans un plan de coupe méridienne du pneumatique, une trajectoire d'interface.

La couche de support est destinée à ne pas entrer en contact avec le sol lors du roulage du pneumatique et ce au moins tant que le seuil d'usure réglementaire n'est pas atteint. En d'autres termes, en définissant, dans le plan méridien, une trajectoire d'usure réglementaire parallèle à la surface de roulement du pneumatique à l'état neuf et passant par le point le plus radialement externe du témoin d'usure réglementaire, la trajectoire d'interface située à l'aplomb radial des blocs de sculpture est agencée, dans le plan méridien, radialement à l'intérieur de la trajectoire d'usure réglementaire.

Le pneumatique MICHELIN Primacy 4 décrit ci-dessus présente notamment une très faible résistance au roulement. En effet, chaque matériau élastomérique de roulement et de support présente une perte dynamique respectivement notée tanDMAX23_1, tanDMAX23_2 et mesurée selon la norme ASTM D-5992-96, à une température de 23°C et à une fréquence de 10Hz relativement faible et égale respectivement à 0,38 et 0,15.

La recherche de valeurs relativement faibles des pertes dynamiques tanDMAX23_1, tanDMAX23_2 afin d'atteindre une très faible résistance au roulement, conduit à subir, une fois ayant dépassé la moitié de son potentiel d'usure, une dégradation de la performance de freinage sur sol mouillé par rapport au pneumatique neuf.

On connait également des pneumatiques décrits dans EP2108527, EP0558037 et EP2815893.

L'invention a pour objet un pneumatique présentant, une fois ayant dépassé la moitié de son potentiel d'usure, une performance de freinage sur sol mouillé améliorée par rapport à celle du pneumatique de l'état de la technique.

A cet effet, l'invention a pour objet un pneumatique pour véhicule de tourisme comprenant une bande de roulement comprenant des découpures et des blocs de sculpture, les découpures séparant les blocs de sculptures les uns des autres, la bande de roulement étant destinée à entrer en contact avec le sol lors d'un roulage du pneumatique par l'intermédiaire d'une surface de roulement, la bande de roulement comprenant au moins un témoin d'usure réglementaire définissant un seuil d'usure réglementaire, et
dans une portion axialement centrale de la bande de roulement présentant une largeur axiale égale à au moins 70% de la largeur de la surface de roulement, la bande de roulement comprend :
   - une couche de roulement portant la surface de roulement, la couche de roulement comprenant un matériau élastomérique de roulement présentant :
      - un module complexe de cisaillement dynamique G*_1 mesuré à 10% de déformation selon la norme ASTM D-5992-96, à une température de 23°C et à une fréquence de 10Hz, et
      - une perte dynamique tanD0_1 mesurée selon la norme ASTM D-5992-96, à une température de 0°C et à une fréquence de 10Hz,
   - une couche de support de la couche de roulement agencée radialement à l'intérieur de la couche de roulement, la couche de support comprenant un matériau élastomérique de support présentant :
      - un module complexe de cisaillement dynamique G*_2 mesuré à 10% de déformation selon la norme ASTM D-5992-96, à une température de 23°C et à une fréquence de 10Hz, et
      - une perte dynamique tanD0_2 mesurée selon la norme ASTM D-5992-96, à une température de 0°C et à une fréquence de 10Hz,
le matériau élastomérique de roulement étant différent du matériau élastomérique de support de sorte que la couche de roulement et la couche de support sont jointives par l'intermédiaire d'une interface décrivant, dans un plan de coupe méridienne comprenant le témoin d'usure réglementaire, une trajectoire d'interface,
**caractérisé en ce que** tanD0_2 ≥ 0,37 x tanD0_1 et G*_2 ≥ 0,90 x G*_1,
**en ce que,** dans la portion axialement centrale de la bande de roulement, en définissant, dans le plan de coupe méridienne, une trajectoire d'usure réglementaire parallèle à la surface de roulement du pneumatique à l'état neuf et passant par le point le plus radialement externe du témoin d'usure réglementaire, au moins 75% de la longueur de la trajectoire d'interface située à l'aplomb radial des blocs de sculpture est agencée, dans le plan de coupe méridienne, radialement à l'intérieur de la trajectoire d'usure réglementaire, et **en ce que,** dans la portion axialement centrale de la bande de roulement, au moins 75% de la longueur de la trajectoire d'interface située à l'aplomb radial des blocs de sculpture est agencée, dans le plan de coupe méridienne, à une distance radiale moyenne inférieure ou égale à 2,0 mm de la trajectoire d'usure réglementaire.

Le pneumatique selon l'invention présente une fois ayant dépassé la moitié de son potentiel d'usure, une performance de freinage sur sol mouillé significativement améliorée par rapport à celle du pneumatique de l'état de la technique comme le montrent les essais comparatifs décrits ci-dessous.

L'invention est notamment remarquable en ce que la couche de support, qui n'est pourtant pas destinée pour sa grande majorité à venir en contact du sol lors du roulage du pneumatique, permet d'améliorer la performance de freinage sur sol mouillé du pneumatique une fois celui-ci ayant dépassé la moitié de son potentiel d'usure.

D'une part, la perte dynamique tanD0 mesurée à 0°C permet de caractériser le potentiel d'adhérence sur sol mouillé. En effet, lors du roulage du pneumatique sur un sol mouillé présentant des aspérités, la bande de roulement se déforme pour épouser les sommets des aspérités formant des indenteurs. Une fois le pneumatique ayant dépassé la moitié de son potentiel d'usure, la couche de support agit sur ce mécanisme d'indentation et ce d'autant plus efficacement que la perte dynamique tanD0 mesurée à 0°C de la couche de support est relativement élevée par rapport à la perte dynamique tanD0 mesurée à 0°C de la couche de roulement. Ainsi, en satisfaisant la caractéristique selon laquelle tanD0_2 ≥ 0,37 x tanD0_1, on améliore le potentiel d'adhérence du pneumatique sur sol mouillé une fois celui-ci ayant dépassé la moitié de son potentiel d'usure.

D'autre part, le module complexe de cisaillement dynamique G* mesuré à 10% de déformation à 23°C caractérise la rigidité d'une couche et donc la capacité de cette couche à lutter contre la déformation de la bande de roulement sous l'effet de la pression de l'eau lorsque le pneumatique roule sur un sol mouillé. Ce mécanisme de déformation de la bande de roulement est connu sous le nom de cloquage et est susceptible d'entrainer une perte de contact d'une partie de l'aire de contact avec le sol et donc de réduire l'adhérence du pneumatique. Une fois le pneumatique ayant dépassé la moitié de son potentiel d'usure, la couche de support agit sur ce mécanisme de cloquage et ce d'autant plus efficacement que le module complexe de cisaillement dynamique G* mesuré à 10% de déformation à 23°C de la couche de support est relativement élevé par rapport au module complexe de cisaillement dynamique G* mesuré à 10% de déformation à 23°C de la couche de roulement. Ainsi, en satisfaisant la caractéristique selon laquelle G*_2 ≥ 0,90 x G*_1, on améliore la rigidité de la couche de support et donc celle de la bande de roulement une fois celui-ci ayant dépassé la moitié de son potentiel d'usure.

On notera que, conformément à l'invention, il est nécessaire de contrôler le potentiel d'adhérence et la rigidité de la bande de roulement. En effet, améliorer le potentiel d'adhérence sur sol mouillé n'a d'intérêt que si la bande de roulement est correctement plaquée sur le sol et inversement.

Le module complexe en cisaillement G* est une propriété dynamique bien connue de l'homme du métier et est mesurée sur un viscoanalyseur de type Metravib VA4000 en utilisant des éprouvettes extraites du pneumatique. On enregistre la réponse des éprouvettes soumises à une sollicitation sinusoïdale en cisaillement simple alterné, à la fréquence de 10 Hz dans des conditions déterminées de température (ici 23°C) selon la norme ASTM D1349-99. On effectue un balayage en amplitude de déformation de 0,1% à 100% (cycle aller), puis de 100% à 0,1% (cycle retour). L'éprouvette est de section cylindrique telle que décrite dans la norme ASTM D 5992 - 96 (version publiée en Septembre 2006, initialement approuvée en 1996) à la figure X2.1 (mode de réalisation circulaire) et présente un diamètre de 10 mm [0 à + 0.04mm] et une épaisseur de 2 mm [1.85-2.20]. Le module complexe de cisaillement dynamique G* est défini comme la racine carrée de la somme du carré de G' et du carré de G" dans laquelle G' représente le module élastique et G" représente le module visqueux. On mesure alors le module complexe en cisaillement G* à 10% de déformation sur le cycle retour.

La perte dynamique tanD0 est une autre propriété dynamique bien connue de l'homme du métier et est mesurée sur ce même viscoanalyseur de type Metravib VA4000 en utilisant des éprouvettes identiques extraites du pneumatique. Afin de déterminer cette propriété, on effectue un balayage en température selon une rampe de température croissante de 1,5°C par minute, depuis une température Tmin inférieure à la température de transition vitreuse Tg du matériau, jusqu'à une température Tmax qui peut correspondre au plateau caoutchoutique du matériau élastomérique. Avant de commencer le balayage, on stabilise l'échantillon à la température Tmin pendant 20 minutes pour avoir une température homogène au sein de l'éprouvette. Pour chaque valeur de température, on enregistre la réponse de l'éprouvette soumis à une sollicitation sinusoïdale en cisaillement simple alterné, à la fréquence de 10 Hz jusqu'à atteindre une contrainte représentative du point de fonctionnement du matériau élastomérique dans le pneumatique, ici 0,7 MPa. La valeur de la perte dynamique tanD0 est la mesure effectuée pour la valeur de température égale à 0°C.

La perte dynamique tanDMAX23 est encore une autre une propriété dynamique bien connue de l'homme du métier et est mesurée sur ce même viscoanalyseur de type Metravib VA4000 en utilisant des éprouvettes identiques extraites du pneumatique. On enregistre la réponse de l'éprouvette soumis à une sollicitation sinusoïdale en cisaillement simple alterné, à la fréquence de 10 Hz dans des conditions déterminées de températures (ici 23°C) selon la norme ASTM D1349-99. On effectue un balayage en amplitude de déformation de 0,1% à 100% (cycle aller), puis de 100% à 0,1% (cycle retour). La tangente de l'angle de phase D entre la force exercée sur l'échantillon et le déplacement de celui-ci traduit une perte dynamique et est égale au rapport G"/G'. On enregistre la valeur maximale tanDMAX de la tangente de l'angle de phase D observé sur le cycle retour de déformation.

La caractéristique selon laquelle au moins 75% de la longueur de la trajectoire d'interface située à l'aplomb radial des blocs de sculpture est agencée, dans le plan de coupe méridienne, radialement à l'intérieur de la trajectoire d'usure réglementaire caractérise le fait que, en grande majorité, la couche de support est destinée à ne pas entrer en contact avec le sol lors du roulage du pneumatique et ce au moins tant que le seuil d'usure réglementaire n'est pas atteint. Contrairement au pneumatique de l'état de la technique, dans le pneumatique selon l'invention, ponctuellement, c'est-à-dire sur au plus 25% de la longueur de la trajectoire d'interface située à l'aplomb radial des blocs de sculpture, la couche de support peut être amenée à entrer en contact avec le sol. En effet, en raison de la valeur relativement élevée de la perte dynamique tanD0_2 de la couche de support, le potentiel d'adhérence procuré par cette couche de support serait, en cas de contact avec le sol, supérieur au potentiel d'adhérence procuré par la couche de support du pneumatique de l'état de la technique si cette dernière venait à entrer en contact avec le sol. En d'autres termes, si la couche de support du pneumatique selon l'invention vient à entrer en contact avec le sol, le potentiel d'adhérence ne s'en trouverait pas significativement dégradé.

Cette caractéristique est particulièrement avantageuse car elle permet d'éviter la mise au rebut des pneumatiques dont une partie faible mais non négligeable de la couche de support remonte radialement au-dessus de la trajectoire d'usure réglementaire. De telles remontées radiales sont notamment observées à proximité des découpures dont le moulage entrainent un fluage axial vers l'extérieur des matériaux élastomériques de roulement et de support situés à l'aplomb radial des découpures et en conséquence, un fluage radial vers l'extérieur des matériaux élastomériques de roulement et de support situés radialement à proximité des découpures.

De plus, la caractéristique selon laquelle on observe l'agencement spécifique des couches de roulement et de support ainsi que les propriétés des matériaux de roulement et de support selon l'invention sur la portion axialement centrale de bande de roulement permet de refléter le fait que l'invention nécessite un agencement et des propriétés des matériaux sur une portion axiale significative de la bande de roulement destinée à entrer au contact du sol, ici au moins égale à 70% de la largeur de la surface de roulement. La portion axialement centrale comprend le plan médian du pneumatique.

Dans une première variante préférée et conforme à l'invention, la portion axialement centrale de la bande de roulement présente une largeur axiale égale à la largeur axiale de la surface de roulement. En d'autres termes, la portion axialement centrale de la bande de roulement présente une largeur axiale égale à 100% de la largeur de la surface de roulement.

Dans une deuxième variante également conforme à l'invention, la portion axialement centrale de la bande de roulement présente une largeur axiale strictement inférieure à la largeur axiale de la surface de roulement de sorte que la bande de roulement comprend des portions axialement latérales agencées axialement à l'extérieur de la portion axialement centrale, chaque portion axialement latérale présentant une largeur axiale au plus égale à 15% de la largeur axiale de la bande de roulement. Dans une première configuration de cette deuxième variante, les portions axialement latérales présentent un agencement spécifique différent de celui de la portion axialement centrale. Dans une deuxième configuration de cette deuxième variante, les portions axialement latérales présentent des propriétés matériaux différentes de celles de la portion axialement centrale.

De façon classique, on détermine la surface de roulement sur un pneumatique monté sur une jante nominale et gonflé à la pression nominale. Dans le cas d'une frontière évidente entre la surface de roulement et le reste du pneumatique, la largeur axiale de la surface de roulement est simplement mesurée. Dans le cas où la surface de roulement est continue avec les surfaces externes des flancs du pneumatique, la limite axiale de la surface de roulement passe par le point pour lequel l'angle entre la tangente à la surface de roulement et une droite parallèle à la direction axiale passant par ce point est égal à 30°. Lorsqu'il existe sur un plan de coupe méridienne, plusieurs points pour lesquels ledit angle est égal en valeur absolue à 30°, on retient le point radialement le plus à l'extérieur.

La trajectoire d'interface située à l'aplomb radial des blocs de sculpture est délimitée axialement par deux droites perpendiculaires à la surface de roulement et passant par les extrémités axiales de chaque bloc de sculpture appartenant à la surface de roulement lorsque le pneumatique est neuf.

Conformément à l'invention, il est nécessaire que la couche de support ne soit pas radialement trop éloignée de la surface de roulement une fois le pneumatique ayant dépassé la moitié de son potentiel d'usure pour que cette couche de support ait un effet significatif sur les mécanismes d'indentation et de cloquage décrits ci-dessus. Ainsi, une partie significative de la longueur de la trajectoire d'interface située à l'aplomb radial des blocs de sculpture, ici au moins 75%, est agencée, dans le plan de coupe méridienne, à une distance relativement faible de la trajectoire d'usure réglementaire, ici à une distance inférieure ou égale à 2,0 mm. Afin de déterminer la distance radiale moyenne entre la trajectoire d'interface et la trajectoire d'usure réglementaire, on prendra la moyenne des distances radiales entre la trajectoire d'interface et la trajectoire d'usure réglementaire mesurées régulièrement le long de la trajectoire d'interface située à l'aplomb radial des blocs de sculpture, par exemple tous les millimètres.

Le fait que les couches de roulement et de support soient jointives caractérise notamment le fait que les matériaux de roulement et de support sont directement au contact l'un de l'autre le long de l'interface et qu'aucun autre matériau n'est radialement interposé entre les couches de roulement et de support.

Afin de déterminer la longueur de la trajectoire d'interface située à l'aplomb radial des blocs de sculpture, on mesure, dans le plan de coupe méridienne, la longueur curviligne de la trajectoire d'interface agencée à l'aplomb radial de la surface de roulement, ce qui exclut implicitement la longueur de la trajectoire d'interface agencée à l'aplomb radial des différentes découpures qui, elles, ne présentent pas de surface destinée à venir en contact avec le sol.

Afin de déterminer si une longueur de la trajectoire d'interface située à l'aplomb radial des blocs de sculpture est agencée radialement à l'intérieur ou à l'extérieur de la trajectoire d'usure réglementaire, on détermine, pour chaque point de la trajectoire d'interface, si son projeté radial sur la trajectoire d'usure règlementaire est situé radialement à l'intérieur ou à l'extérieur de ce point. D'une façon analogue, pour déterminer la distance entre la trajectoire d'interface située à l'aplomb radial des blocs de sculpture et la trajectoire d'usure réglementaire, on détermine, pour chaque point de la trajectoire d'interface, la distance entre ce point de la trajectoire d'interface et son projeté radial sur la trajectoire d'usure règlementaire.

Les caractéristiques géométriques décrites dans la présente demande peuvent être simplement déterminées sur une coupe méridienne du pneumatique.

Un matériau élastomérique est un matériau présentant un comportement élastomérique. Un tel matériau est avantageusement obtenu par réticulation d'une composition réticulable comprenant au moins un élastomère et au moins un autre composant. De préférence, la composition réticulable comprenant au moins un élastomère et au moins un autre composant comprend un élastomère, un système de réticulation et une charge. Les compositions réticulables utilisées pour les couches de roulement et de support sont des compositions conventionnelles pour bande de roulement de pneumatique, typiquement à base d'un élastomère diénique, d'une charge renforçante telle que du noir de carbone ou d'une silice, d'un système de vulcanisation et des additifs usuels.

Afin de permettre notamment l'évacuation de l'eau et d'assurer de bonnes performances en adhérence sur sol mouillé, la bande de roulement du pneumatique selon l'invention comprend des découpures. Une découpure désigne soit un puits, soit une rainure, soit une incision et forme un espace débouchant sur la surface de roulement.

Une incision ou une rainure présente, sur la surface de roulement, deux dimensions principales caractéristiques : une largeur W et une longueur Lo, telles que la longueur Lo est au moins égale à deux fois la largeur W. Une incision ou une rainure est donc délimitée par au moins deux faces latérales principales déterminant sa longueur Lo et reliées par une face de fond, les deux faces latérales principales étant distantes l'une de l'autre d'une distance non nulle, dite largeur W de la découpure. La largeur W de la découpure est, sur un pneumatique neuf, la distance maximale entre les deux faces latérales principales mesurée, dans le cas où la découpure ne comprend pas de chanfrein, à une cote radiale confondue avec la surface de roulement, et dans le cas où la découpure comprend un chanfrein, à la cote radiale la plus radialement extérieure de la découpure et radialement intérieure au chanfrein. La profondeur de la découpure est, sur un pneumatique neuf, la distance radiale maximale entre le fond de la découpure et son projeté sur le sol lors du roulage du pneumatique. La valeur maximale des profondeurs des découpures est nommée profondeur de sculpture.

Une incision est telle que la distance entre les faces latérales principales est appropriée pour permettre la mise en contact au moins partielle des faces latérales principales délimitant ladite incision lors du passage dans l'aire de contact, notamment lorsque le pneumatique est à l'état neuf et dans des conditions usuelles de roulage, comprenant notamment le fait que le pneumatique soit à charge nominale et à pression nominale. D'une façon générale, la largeur d'une incision est inférieure ou égale à 2 mm.

Une rainure est telle que la distance entre les faces latérales principales est telle que ces faces latérales principales ne peuvent venir en contact l'une contre l'autre dans des conditions usuelles de roulage, comprenant notamment le fait que le pneumatique soit à charge nominale et à pression nominale. D'une façon générale, la largeur d'une rainure est strictement supérieure à 2 mm, de préférence supérieure ou égale à 5 mm et plus préférentiellement supérieure ou égale à 8 mm.

Une rainure peut notamment être une rainure circonférentielle, c'est-à-dire une rainure s'étendant selon une direction principale formant un angle inférieur ou égal à 30°, de préférence inférieur ou égal à 10° avec à la direction circonférentielle du pneumatique. Une rainure circonférentielle peut être continue, c'est-à-dire ne pas être interrompue par un bloc de sculpture ou une autre découpure de sorte que les deux faces latérales principales déterminant sa longueur sont ininterrompue sur l'ensemble d'un tour du pneumatique. Une rainure circonférentielle peut également être discontinue, c'est-à-dire interrompue par un ou plusieurs blocs de sculpture et/ou une ou plusieurs découpures de sorte que les deux faces latérales principales déterminant sa longueur sont interrompues par un ou plusieurs blocs de sculpture et/ou une ou plusieurs découpures. D'une façon générale, la profondeur d'une rainure circonférentielle du pneumatique à l'état neuf est supérieure ou égale à 85%, de préférence à 90% de la profondeur de sculpture. De façon très classique, la profondeur d'une rainure circonférentielle du pneumatique à l'état neuf est supérieure ou égale à 4,0 mm, de préférence supérieure ou égale à 5,0 mm et plus préférentiellement supérieure ou égale à 5,5 mm. Les découpures séparant les blocs de sculpture du pneumatique selon l'invention sont très préférentiellement des rainures circonférentielles.

Le pneumatique selon l'invention présente une forme sensiblement torique autour d'un axe de révolution sensiblement confondu avec l'axe de rotation du pneumatique. Cet axe de révolution définit trois directions classiquement utilisées par l'homme du métier : une direction axiale, une direction circonférentielle et une direction radiale.

Par direction axiale, on entend la direction sensiblement parallèle à l'axe de révolution du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique (noté E), on entend, dans un plan de coupe méridienne, le plan passant par l'équateur du pneumatique, perpendiculaire au plan médian et à la direction radiale. L'équateur du pneumatique est, dans un plan de coupe méridienne (plan perpendiculaire à la direction circonférentielle et parallèle aux directions radiale et axiales) l'axe parallèle à l'axe de rotation du pneumatique et située à équidistance entre le point radialement le plus extérieur de la bande de roulement destiné à être au contact avec le sol et le point radialement le plus intérieur du pneumatique destiné à être en contact avec un support, par exemple une jante, la distance entre ces deux points étant égale à H.

Par plan méridien, on entend un plan parallèle à et contenant l'axe de rotation du pneumatique et perpendiculaire à la direction circonférentielle.

Par radialement intérieur, respectivement radialement extérieur, on entend plus proche de l'axe de rotation du pneumatique, respectivement plus éloigné de l'axe de rotation du pneumatique. Par axialement intérieur, respectivement axialement extérieur, on entend plus proche du plan médian du pneumatique, respectivement plus éloigné du plan médian du pneumatique.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les pneumatiques de l'invention sont destinés à des véhicule de tourisme tels que définis au sens de la norme de la European Tyre and Rim Technical Organisation ou « ETRTO », 2019. Un tel pneumatique présente une section dans un plan de coupe méridien caractérisée par une hauteur de section H et une largeur de section nominale ou grosseur boudin S au sens de la norme de la European Tyre and Rim Technical Organisation ou « ETRTO », 2019.

Les pneumatiques de l'invention sont préférentiellement destinés à des véhicules de tourisme. Un tel pneumatique présente une section dans un plan de coupe méridien caractérisée par une largeur de section nominale ou grosseur boudin S et une hauteur de section H, au sens de la norme de la European Tyre and Rim Technical Organisation (désigné par l'acronyme « ETRTO ») - - Standards Manual 2019, telles que le rapport H/S, exprimé en pourcentage, est au plus égal à 90, de préférence au plus égal à 80 et plus préférentiellement au plus égal à 70 et est au moins égal à 30, de préférence au moins égal à 40, et la largeur de section nominale S est au moins égale à 115 mm, de préférence au moins égale à 155 mm et plus préférentiellement au moins égale à 175 mm et au plus égal à 385 mm, de préférence au plus égal à 315 mm, plus préférentiellement au plus égal à 285 mm et encore plus préférentiellement au plus égal à 255 mm. En outre le diamètre au crochet D, définissant le diamètre de la jante de montage du pneumatique, est au moins égal à 12 pouces, de préférence au moins égal à 16 pouces et au plus égal à 24 pouces, de préférence au plus égal à 20 pouces.

Comme expliqué précédemment, bien que la couche de support ne dégrade pas significativement le potentiel d'adhérence dans le cas où cette couche de support vient au contact du sol, il est préférable de minimiser la proportion de cette couche de support susceptible de venir au contact avec le sol. Ainsi, avantageusement, au moins 80% et de préférence au moins 90% de la longueur de la trajectoire d'interface située à l'aplomb radial des blocs de sculpture est agencée, dans le plan de coupe méridienne, radialement à l'intérieur de la trajectoire d'usure réglementaire.

Afin de maximiser l'effet de la couche de support sur les mécanismes d'indentation et de cloquage, on comprendra qu'il est préférable qu'une proportion la plus grande possible de la couche de support se trouve radialement relativement proche de la trajectoire d'usure réglementaire. Ainsi, avantageusement, au moins 80% et de préférence au moins 90% de la longueur de la trajectoire d'interface située à l'aplomb radial des blocs de sculpture est agencée, dans le plan de coupe méridienne, à une distance radiale inférieure ou égale à 2,0 mm.

Toujours afin de maximiser l'effet de la couche de support sur les mécanismes d'indentation et de cloquage, on comprendra qu'il est préférable que la couche de support se trouve radialement le plus proche de la trajectoire d'usure réglementaire et ce quelle que soit la proportion de cette couche de support. Ainsi, au moins 75%, de préférence au moins 80% et plus préférentiellement au moins 90% de la longueur de la trajectoire d'interface située à l'aplomb radial des blocs de sculpture est agencée, dans le plan de coupe méridienne, à une distance radiale avantageusement inférieure ou égale à 1,2 mm et plus préférentiellement inférieure ou égale à 1,0 mm de la trajectoire d'usure réglementaire.

Afin d'améliorer l'effet de la couche de support sur le mécanisme d'indentation, dans un mode de réalisation avantageux, on a tanD0_2 ≥ 0,5 x tanD0_1, de préférence tanD0_2 ≥ 0,75 x tanD0_1 et plus préférentiellement tanD0_2 ≥ tanD0_1, encore plus préférentiellement tanD0_2 > tanD0_1 et très préférentiellement tanD0_2 ≥ 1,10 x tanD0_1. En effet, plus on augmente la valeur tanD0_2, plus on améliore le potentiel d'adhérence du pneumatique sur sol mouillé une fois celui-ci ayant dépassé la moitié de son potentiel d'usure. Dans les cas plus préférentiel et très préférentiel dans lequel tanD0_2 > tanD0_1 et tanD0_2 ≥ 1,10 x tanD0_1, si la couche de support du pneumatique selon l'invention vient à entrer en contact avec le sol, le potentiel d'adhérence ne s'en trouverait non seulement pas significativement dégradé, mais bien au contraire améliorée.

Afin d'améliorer l'effet de la couche de support sur le mécanisme de cloquage, dans un mode de réalisation avantageux, on a G*_2 ≥ 0,92 x G*_1, de préférence G*_2 ≥ G*_1 et plus préférentiellement G*_2 > G*_1. En effet, plus on augmente la valeur G*_2, plus on augmente la rigidité de la couche de support et donc celle de la bande de roulement une fois celui-ci ayant dépassé la moitié de son potentiel d'usure.

Dans un mode de réalisation particulier permettant de maximiser l'effet de la couche de support sur les mécanismes d'indentation et de cloquage, dans la portion axialement centrale de la bande de roulement, au moins 75% de la longueur de la trajectoire d'interface située à l'aplomb radial des blocs de sculpture est agencée, dans le plan de coupe méridienne, radialement à l'extérieur d'une trajectoire parallèle à la surface de roulement du pneumatique à l'état neuf et passant par le point le plus radialement interne de la ou de chaque découpure la plus profonde. En d'autres termes, la trajectoire d'interface est située à une cote radiale située dans le prolongement axial de l'épaisseur du témoin d'usure réglementaire. En effet, le témoin d'usure réglementaire est agencé très préférentiellement au fond de la ou d'une des découpures la plus profonde.

Dans le cas où plusieurs découpures d'égale profondeur sont les plus profondes, la caractéristique précédente est vérifiée pour chaque découpure la plus profonde comprenant un témoin d'usure réglementaire.

Afin de maximiser l'effet de la couche de support sur les mécanismes d'indentation et de cloquage, on comprendra qu'il est préférable qu'une proportion la plus grande possible de la couche de support se trouve radialement dans le prolongement axial de l'épaisseur du témoin d'usure réglementaire. Ainsi, avantageusement, au moins 80% et de préférence au moins 90% de la longueur de la trajectoire d'interface située à l'aplomb radial des blocs de sculpture est agencée, dans le plan de coupe méridienne, radialement à l'extérieur d'une trajectoire parallèle à la surface de roulement du pneumatique à l'état neuf et passant par le point le plus radialement interne de la découpure la plus profonde ou de chaque découpure la plus profonde dans le cas où il existe plusieurs découpures d'égale profondeur, toutes étant les plus profondes de la bande de roulement.

Afin d'éviter de voir trop de remontées de la couche de support au travers de la couche de roulement et donc la mise au rebus de pneumatiques non conformes car présentant une proportion trop importante de couche de support susceptible de venir au contact du sol, dans la portion axialement centrale de la bande de roulement, au moins 75% de la longueur de la trajectoire d'interface située à l'aplomb radial des blocs de sculpture est agencée, dans le plan de coupe méridienne, à une distance radiale moyenne supérieure ou égale à 0,4 mm, de préférence supérieure ou égale à 0,6 mm de la trajectoire d'usure réglementaire. En outre, pour une épaisseur donnée de la bande de roulement, en augmentant la distance radiale entre la trajectoire d'interface et la trajectoire d'usure réglementaire, on réduit le volume de matériau élastomérique de support utilisé.

De façon à amplifier encore davantage la réduction des remontées et la minimisation du volume de matériau élastomérique de support utilisé, avantageusement au moins 80% et de préférence au moins 90% de la longueur de la trajectoire d'interface située à l'aplomb radial des blocs de sculpture est agencée, dans le plan de coupe méridienne, à une distance radiale supérieure ou égale à 0,4 mm, de préférence supérieure ou égale à 0,6 mm de la trajectoire d'usure réglementaire.

Dans un mode de réalisation particulièrement avantageux dans lequel on autorise des remontées ponctuelles de la couche de support et on évite la mise au rebus systématique des pneumatique dont une partie minime de la trajectoire d'interface est située radialement à l'extérieur de la trajectoire d'usure réglementaire, dans la portion axialement centrale de la bande de roulement, au moins une longueur non nulle de la trajectoire d'interface située à l'aplomb radial des blocs de sculpture est agencée, dans le plan de coupe méridienne, radialement à l'extérieur de la trajectoire d'usure réglementaire. Conformément à l'invention, cette longueur est au plus égal à 25% de la longueur de la trajectoire d'interface située à l'aplomb radial des blocs de sculpture.

Dans un mode de réalisation permettant d'optimiser l'effet de la couche de roulement sur le mécanisme d'indentation, tanD0_1 va de 0,50 à 1,00 et plus préférentiellement va de 0,50 à 0,85.

Dans un mode de réalisation permettant d'optimiser l'effet de la couche de support sur le mécanisme d'indentation, tanD0_2 va de 0,60 à 1,10 et plus préférentiellement va de 0,60 à 1,00.

Dans un mode de réalisation permettant d'optimiser l'effet de la couche de roulement sur le mécanisme de cloquage, G*_1 va de 1,30 MPa à 4,10 MPa, et de préférence va de 1,30 MPa à 3,00 MPa.

Dans un mode de réalisation permettant d'optimiser l'effet de la couche de support sur le mécanisme de cloquage, G*_2 est supérieur ou égal à 2,00 MPa, de préférence va de 2,00 à 4,10 MPa et plus préférentiellement va de 2,15 à 3,50 MPa.

De façon conventionnelle, le pneumatique comprend un sommet, deux flancs, deux bourrelets, chaque flanc reliant chaque bourrelet au sommet. Toujours de façon conventionnelle, le sommet comprend la bande de roulement et une armature de sommet agencée radialement à l'intérieur de la bande de roulement. Le pneumatique comprend également une armature de carcasse ancrée dans chaque bourrelet et s'étendant dans chaque flanc et radialement intérieurement au sommet.

De façon conventionnelle, l'armature de sommet comprend au moins une couche de sommet comprenant des éléments de renforcement. Ces éléments de renforcement sont préférentiellement des éléments filaires textiles ou métalliques.

Dans des modes de réalisation permettant l'obtention des performances de pneumatiques dits radiaux comme défini par l'ETRTO, l'armature de carcasse comprend au moins une couche de carcasse, la ou chaque couche de carcasse comprenant des éléments de renforcement filaires de carcasse, chaque élément de renforcement filaire de carcasse s'étendant sensiblement selon une direction principale formant avec la direction circonférentielle du pneumatique, un angle, en valeur absolue, allant de 80° à 90°.

Avantageusement, le pneumatique comprenant un sommet comprenant une armature de sommet agencée radialement à l'intérieur de la bande de roulement, dans la portion axialement centrale de la bande de roulement, la distance moyenne entre la couche comprenant des éléments de renforcement radialement la plus externe de l'armature de sommet et le point le plus radialement interne de la ou de chaque découpure la plus profonde est inférieure ou égale à 2,50 mm, de préférence inférieure ou égale à 2,25 mm. Comme expliqué précédemment, lors du moulage du pneumatique, on observe un fluage axial vers l'extérieur des matériaux élastomériques de roulement et de support situés à l'aplomb radial des découpures et en conséquence, un fluage radial vers l'extérieur des matériaux élastomériques de roulement et de support situés radialement à proximité des découpures. Ces fluages sont d'autant plus importants que l'épaisseur de matériau élastomérique située radialement à l'extérieur de l'armature de sommet et radialement à l'intérieur de chaque découpure et plus particulièrement radialement à l'intérieur de la découpure la plus profonde est faible. Du fait que l'invention autorise des remontées ponctuelles de la couche de support au travers de la couche de roulement, il est possible de réduire l'épaisseur de matériau élastomérique située radialement à l'extérieur de l'armature de sommet et radialement à l'intérieur chaque découpure et plus particulièrement radialement à l'intérieur de la découpure la plus profonde. Cette réduction permet de réduire la masse du pneumatique mais également sa résistance au roulement.

Dans le cas où plusieurs découpures d'égale profondeur sont les plus profondes, la caractéristique précédente est vérifiée pour chaque découpure la plus profonde. De préférence, la découpure la plus profonde étant une rainure circonférentielle, dans la portion axialement centrale de la bande de roulement, la distance moyenne entre la couche comprenant des éléments de renforcement radialement la plus externe de l'armature de sommet et le point le plus radialement interne de chaque rainure circonférentielle est inférieure ou égale à 2,50 mm, de préférence inférieure ou égale à 2,25 mm.

De façon à néanmoins protéger l'armature de sommet des agressions extérieures, le pneumatique comprenant un sommet comprenant une armature de sommet agencée radialement à l'intérieur de la bande de roulement, dans la portion axialement centrale de la bande de roulement, la distance moyenne entre la couche comprenant des éléments de renforcement radialement la plus externe de l'armature de sommet et le point le plus radialement interne de la ou de chaque découpure la plus profonde est supérieure ou égale à 1,0 mm.

Dans le cas où plusieurs découpures d'égale profondeur sont les plus profondes, les caractéristiques précédentes sont vérifiées pour chaque découpure la plus profonde. De préférence, la découpure la plus profonde étant une rainure circonférentielle, dans la portion axialement centrale de la bande de roulement, la distance moyenne entre la couche comprenant des éléments de renforcement radialement la plus externe de l'armature de sommet et le point le plus radialement interne de chaque rainure circonférentielle est supérieure ou égale à 1,0 mm.

Afin de déterminer la distance moyenne entre la couche comprenant des éléments de renforcement radialement la plus externe de l'armature de sommet et le point le plus radialement interne de la ou de chaque découpure la plus profonde ou de chaque rainure circonférentielle, on prendra la moyenne des distances droites entre la couche comprenant des éléments de renforcement radialement la plus externe de l'armature de sommet et le point le plus radialement interne de la ou de chaque découpure la plus profonde ou de chaque rainure circonférentielle, par exemple tous les millimètres.

La distance droite entre la couche comprenant des éléments de renforcement radialement la plus externe de l'armature de sommet et le point le plus radialement interne de la ou de chaque découpure la plus profonde ou de chaque rainure circonférentielle est mesurée, dans le plan de coupe méridienne, entre le point le plus radialement interne de la ou de chaque découpure la plus profonde ou de chaque rainure circonférentielle et son projeté radial sur une trajectoire passant par les points les plus radialement extérieurs des éléments de renforcement de la couche de sommet la plus radialement extérieure.

Dans un mode de réalisation simple à mettre en oeuvre industriellement, par exemple avec des moyens d'extrusion, la portion axiale de la bande de roulement située à l'aplomb radial de la ou de chaque découpure la plus profonde comprend une épaisseur radiale non nulle de la couche de roulement et une épaisseur radiale non nulle de la couche de support. De préférence, afin de réduire les problèmes de déséquilibre des flux des matériaux élastomériques sous les découpures lors du procédé d'extrusion, le rapport de l'épaisseur radiale de la couche de roulement sur l'épaisseur radiale de la couche de support va de 0,40 à 0,60.

Dans un mode de réalisation dans lequel on positionne la couche de support uniquement là où elle permet d'améliorer la performance d'adhérence sur sol mouillé et donc de minimiser la quantité de matériau élastomérique de support utilisée, la portion axiale de la bande de roulement située à l'aplomb radial de la ou de chaque découpure la plus profonde est constituée de la couche de roulement. De préférence, la portion axiale de la bande de roulement située à l'aplomb radial de chaque rainure circonférentielle est constituée de la couche de roulement. En d'autres termes, il n'y a pas de matériau élastomérique de support dans la bande de roulement située à l'aplomb radial de la ou de chaque découpure la plus profonde ou à l'aplomb radial de chaque rainure circonférentielle.

Dans les modes de réalisation décrits précédemment, la portion axiale de la bande de roulement située à l'aplomb radial de la ou de chaque découpure la plus profonde ou de chaque rainure circonférentielle est délimitée axialement par deux droites perpendiculaires à la surface de roulement et passant par les extrémités axiales de chacun des blocs de sculpture délimitant la découpure ou chaque rainure et appartenant à la surface de roulement lorsque le pneumatique est neuf.

De façon à obtenir un pneumatique dont la résistance au roulement est la plus faible possible, le matériau élastomérique de roulement présente une perte dynamique tanDMAX23_1 mesurée selon la norme ASTM D-5992-96, à une température de 23°C et à une fréquence de 10Hz, allant de 0,13 à 0,70 et de préférence de 0,13 à 0,47. En effet, la perte dynamique tanDMAX23 mesurée à 23°C et à une fréquence de 10Hz caractérise l'hystérèse d'un matériau élastomérique et donc sa résistance au roulement.

De façon analogue, de façon à minimiser l'impact de la couche de support sur la résistance au roulement du pneumatique, le matériau élastomérique de support présente une perte dynamique tanDMAX23_2 mesurée selon la norme ASTM D-5992-96, à une température de 23°C et à une fréquence de 10Hz, allant de 0,13 à 0,53 et de préférence de 0,13 à 0,46 .

Comme déjà décrit précédemment, le témoin d'usure réglementaire est agencé très préférentiellement au fond de la découpure la plus profonde. De façon très préférentielle, le témoin d'usure est agencé au fond d'une rainure circonférentielle.

Dans un mode de réalisation particulièrement simple à réaliser, le témoin d'usure est formé par une protubérance s'étendant radialement depuis le fond de la découpure radialement vers l'extérieur sur une hauteur radiale allant de 1,45 mm à 1,75 mm et de préférence sensiblement égale à 1,6 mm.

Avantageusement, de façon à conférer au pneumatique un potentiel d'usure relativement important et donc une longévité élevée, la hauteur de sculpture du pneumatique à l'état neuf va de 5,0 à 9,0 mm, de préférence de 6,0 à 7,5 mm. La valeur maximale des profondeurs des découpures est la hauteur de sculpture.

De façon à permettre une évacuation performante de l'eau lors d'un roulage sur sol mouillé, le taux d'entaillement surfacique du pneumatique présentant une hauteur de sculpture égale à 2,0 mm après usure va de 20% à 35%, de préférence de 22% à 30%. L'utilisation d'une couche de support conforme à l'invention est d'autant plus intéressante dans le cas d'un pneumatique présentant un tel taux d'entaillement surfacique après usure dans la mesure où cette couche de support permet de compenser la baisse de la capacité d'évacuation de l'eau avec l'usure, cette baisse étant d'autant plus importante que le taux d'entaillement surfacique est faible.

Le taux d'entaillement surfacique du pneumatique est le rapport de :
- la différence entre l'aire totale AT de l'empreinte de contact de la bande de roulement du pneumatique gonflé à pression nominale et sous une charge nominale avec un sol de roulage lisse, par exemple une vitre, et l'aire de contact AC des éléments de la bande de roulement avec le sol de roulage et
- l'aire totale AT de l'empreinte de contact de la bande de roulement du pneumatique gonflé à pression nominale et sous une charge nominale avec le sol de roulage lisse.

Afin de déterminer le taux d'entaillement surfacique, la charge nominale est égale à 80% de la capacité de charge de la norme de la European Tyre and Rim Technical Organisation ou « ETRTO », 2019 et la pression nominale est égale à 2,5 bars.

De façon à minimiser la quantité de matériau élastomérique de support utilisée, le volume du matériau élastomérique de roulement dans la portion axialement centrale de la bande de roulement est supérieur ou égal à 60%, de préférence supérieur ou égal à 65% du volume de la portion axialement centrale de la bande de roulement et le volume du matériau élastomérique de support dans la portion axialement centrale de la bande de roulement est inférieur ou égal à 40%, de préférence inférieur ou égal à 35% du volume de la portion axialement centrale de la bande de roulement.

Dans un mode de réalisation particulièrement avantageux d'un point de vue de la complexité industrielle et du procédé de fabrication de la bande de roulement, au moins 90% du volume de la portion axialement centrale de la bande de roulement est constituée du matériau de roulement et du matériau de support. Dans le volume éventuellement restant de la portion axialement centrale de la bande de roulement, qui peut aller jusqu'au plus 10% du volume de la portion axialement centrale de la bande de roulement, la bande de roulement peut comprendre une couche de faible épaisseur radiale, inférieure à 0.4 mm agencée entre la couche la plus radialement extérieure de l'armature de sommet et la couche de support afin d'assurer la liaison entre ces deux couches. Additionnellement ou en complément, la bande de roulement peut également comprendre une bande, de faible largeur axiale, de matériau conducteur d'électricité, formant un chemin conducteur entre le sol de roulage et l'armature de sommet, afin de permettre au pneumatique de satisfaire aux normes de conductivité électrique.

Dans un mode de réalisation dans lequel la couche de support déborde axialement jusque dans les portions axialement latérales agencées axialement à l'extérieur de la portion axialement centrale de la bande de roulement et permet d'avoir un effet sur les mécanismes d'indentation et de cloquage décrits précédemment en dehors de la portion axialement centrale, la largeur axiale de la couche de support est supérieure ou égale à 90% de la largeur axiale de la surface de roulement, de préférence la largeur axiale de la couche de support est supérieure ou égale à 100% de la largeur axiale de la surface de roulement.

Dans un autre mode de réalisation dans lequel la couche de support est axialement limitée à la partie centrale de façon à minimiser la quantité de matériau élastomérique de support utilisée, la largeur axiale de la couche de support est inférieure ou égale à 90% de la largeur de la bande de roulement.

L'invention ainsi que ses avantages seront aisément compris à la lumière de la description détaillée et des exemples de réalisation non limitatifs qui suivent, ainsi que des figures 1 à 8 relatives à ces exemples dans lesquels :
- la figure 1 est une vue dans un plan de coupe méridienne d'un pneumatique selon un premier mode de réalisation de l'invention,
- la figure 2 est une vue en arraché du pneumatique de la figure 1 illustrant l'agencement des éléments de renforcement filaires dans et sous le sommet,
- les figures 3 à 6 sont des vue de détails du sommet du pneumatique de la figure 1,
- les figures 7 et 8 sont des vues analogues à celle de la figure 3 de pneumatiques selon respectivement des deuxième et troisième modes de réalisation.

Dans les figures relatives au pneumatique, on a représenté un repère X, Y, Z correspondant aux directions habituelles respectivement axiale (Y), radiale (Z) et circonférentielle (X) d'un pneumatique.

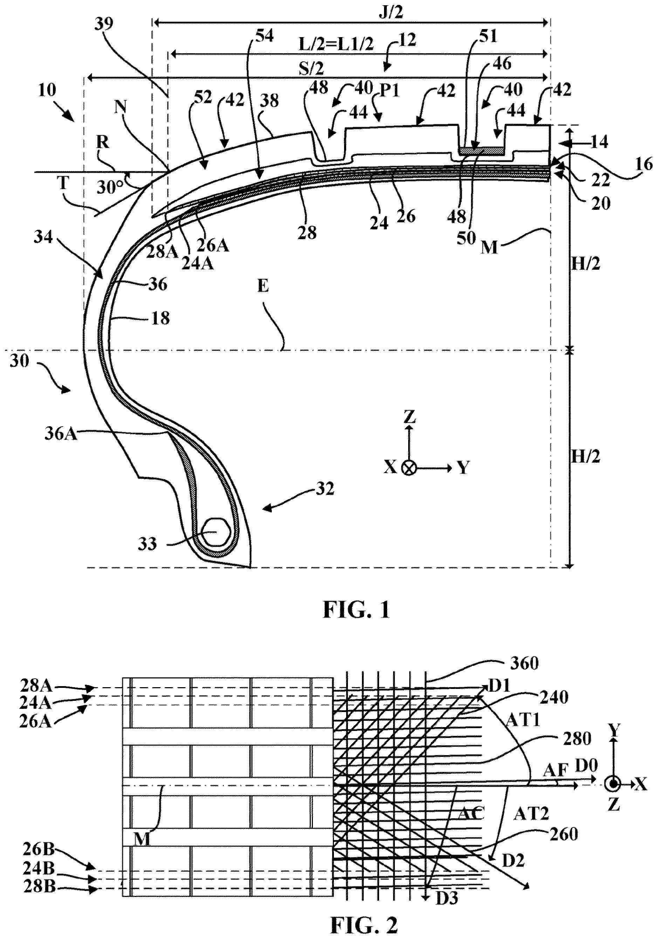

On a représenté sur la figure 1 un pneumatique, conforme à l'invention et désigné par la référence générale 10. Le pneumatique 10 présente une forme sensiblement torique autour d'un axe de révolution sensiblement parallèle à la direction axiale Y. Le pneumatique 10 est destiné à un véhicule de tourisme et présente des dimensions 225/45 R17. Sur les différentes figures, le pneumatique 10 est représenté à l'état neuf, c'est-à-dire n'ayant pas encore roulé.

Le pneumatique 10 comprend un sommet 12 comprenant une bande de roulement 14 destinée à entrer en contact avec un sol lors du roulage et une armature de sommet 16 s'étendant dans le sommet 12 selon la direction circonférentielle X. Le pneumatique 10 comprend également une couche d'étanchéité 18 à un gaz de gonflage étant destiné à délimiter une cavité interne fermée avec un support de montage du pneumatique 10 une fois le pneumatique 10 monté sur le support de montage, par exemple une jante.

L'armature de sommet 16 comprend une armature de travail 20 et une armature de frettage 22. L'armature de travail 16 comprend au moins une couche de travail et ici comprend deux couches de travail 24, 26. En l'espèce, l'armature de travail 16 est constituée des deux couches de travail 24, 26. La couche de travail 24 radialement intérieure est agencée radialement à l'intérieur de la couche de travail 26 radialement extérieure.

L'armature de frettage 22 comprend au moins une couche de frettage et comprend ici une couche de frettage 28. L'armature de frettage 22 est ici constituée de la couche de frettage 28.

L'armature de sommet 16 est surmontée radialement de la bande de roulement 14. Ici, l'armature de frettage 22, ici la couche de frettage 28, est agencée radialement à l'extérieur de l'armature de travail 20 et est donc radialement intercalée entre l'armature de travail 20 et la bande de roulement 14. De façon préférentielle, on pourra envisager que l'armature de frettage 22 présente une largeur axiale au moins aussi grande que la largeur axiale de l'armature de travail 20 et, en l'espèce, dans le mode de réalisation illustré à la figure 1, l'armature de frettage 22 présente une largeur axiale plus grande que la largeur axiale de l'armature de travail 20.

Le pneumatique 10 comprend deux flancs 30 prolongeant le sommet 12 radialement vers l'intérieur. Le pneumatique 10 comporte en outre deux bourrelets 32 radialement intérieurs aux flancs 30. Chaque flanc 30 relie chaque bourrelet 32 au sommet 12.

Le pneumatique 10 comprend une armature de carcasse 34 ancrée dans chaque bourrelet 32, en l'espèce est enroulée autour d'une tringle 33. L'armature de carcasse 34 s'étend dans chaque flanc 30 et radialement intérieurement au sommet 12. L'armature de sommet 16 est agencée radialement entre la bande de roulement 14 et l'armature de carcasse 34. L'armature de carcasse 34 comprend au moins une couche de carcasse et ici comprend une unique couche de carcasse 36. En l'espèce, l'armature de carcasse 34 est constituée de l'unique couche de carcasse 36.

Chaque couche de travail 24, 26 de frettage 28 et de carcasse 36 comprend une matrice élastomérique dans laquelle sont noyés un ou des éléments de renfort filaires de la couche correspondante. On va maintenant décrire ces couches en référence à la figure 2.

L'armature de frettage 22, ici la couche de frettage 28, est délimitée axialement par deux bords axiaux 28A, 28B de l'armature de frettage 22. L'armature de frettage 22 comprend un ou plusieurs éléments de renfort filaires de frettage 280 enroulés circonférentiellement hélicoïdalement de façon à s'étendre axialement du bord axial 28A à l'autre bord axial 28B de la couche de frettage 28 selon une direction principale D0 de chaque élément de renfort filaire de frettage 280. La direction principale D0 forme, avec la direction circonférentielle X du pneumatique 10, un angle AF, en valeur absolue, inférieur ou égal à 10°, de préférence inférieur ou égal à 7° et plus préférentiellement inférieur ou égal à 5°. Ici, AF=-5°. La couche de frettage 28 comprend une densité de 98 éléments de renfort filaires de frettage par décimètre de couche de frettage, cette densité étant mesurée perpendiculairement à la direction D0.

La couche de travail radialement intérieure 24 est délimitée axialement par deux bords axiaux 24A, 24B. La couche de travail radialement intérieure 24 comprend des éléments de renfort filaires de travail 240 s'étendant axialement du bord axial 24A à l'autre bord axial 24B les uns sensiblement parallèlement aux autres selon une direction principale D1. De façon analogue, la couche de travail radialement extérieure 26 est délimitée axialement par deux bords axiaux 26A, 26B. La couche de travail radialement extérieure 26 comprend des éléments de renfort filaires de travail 260 s'étendant axialement du bord axial 26A à l'autre bord axial 26B les uns sensiblement parallèlement aux autres selon une direction principale D2. La direction principale D1 selon laquelle s'étend chaque élément de renfort filaire de travail 240 de la couche de travail radialement intérieure 24 et la direction principale D2 selon laquelle s'étend chaque élément de renfort filaire de travail 260 de l'autre de la couche de travail radialement extérieure 26 forment, avec la direction circonférentielle X du pneumatique 10, des angles respectivement AT1 et AT2 d'orientations opposées. Chaque direction principale D1, D2 forme, avec la direction circonférentielle X du pneumatique 10, un angle respectivement AT1, AT2, en valeur absolue, strictement supérieur à 10°, de préférence allant de 15° à 50° et plus préférentiellement allant de 15° à 30°. Ici, AT1=-26° etAT2=+26°.

La couche de carcasse 36 est délimitée axialement par deux bords axiaux 36A, 36B. La couche de carcasse 36 comprend des éléments de renfort filaires de carcasse 360 s'étendant axialement du bord axial 36A à l'autre bord axial 36B de la couche de carcasse 36 selon une direction principale D3 formant avec la direction circonférentielle X du pneumatique 10, un angle AC, en valeur absolue, supérieur ou égal à 60°, de préférence allant de 80° à 90° et ici AC=+90°.

Chaque élément de renfort filaire de frettage 280 comprend classiquement deux brins multifilamentaires, chaque brin multifilamentaire étant constitué d'un filé de monofilaments de polyamide aliphatique, ici de nylon d'un titre égal à 140 tex, ces deux brins multifilamentaires étant mis en hélice individuellement à 250 tours par mètre dans un sens puis mis en hélice ensemble à 250 tours par mètre dans le sens opposé. Ces deux brins multifilamentaires sont enroulés en hélice l'un autour de l'autre. En variante, on pourra utiliser un élément de renfort filaire de frettage 280 comprenant un brin multifilamentaire constitué d'un filé de monofilaments de polyamide aliphatique, ici de nylon d'un titre égal à 140 tex et un brin multifilamentaire constitué d'un filé de monofilaments de polyamide aromatique, ici d'aramide d'un titre égal à 167 tex, ces deux brins multifilamentaires étant mis en hélice individuellement à 290 tours par mètre dans un sens puis mis en hélice ensemble à 290 tours par mètre dans le sens opposé. Ces deux brins multifilamentaires sont enroulés en hélice l'un autour de l'autre.

Chaque élément de renfort filaire de travail 180 est un assemblage de deux monofilaments en acier enroulés en hélice au pas de 1,2 ou 1,05 mm, chaque monofilament en acier présentant un diamètre égal à 0,30 mm. Dans une autre variante, chaque élément de renfort filaire de travail 180 est constitué d'un monofilament en acier présentant un diamètre égal à 0,30 mm. D'une manière plus générale, les monofilaments en acier présentent des diamètres allant de 0,25 mm à 0,32 mm.

Chaque élément de renfort filaire de carcasse 340 comprend classiquement deux brins multifilamentaires, chaque brin multifilamentaire étant constitué d'un filé de monofilaments de polyester, ici de PET, ces deux brins multifilamentaires étant mis en hélice individuellement à 240 tours par mètre dans un sens puis mis en hélice ensemble à 240 tours par mètre dans le sens opposé. Chacun de ces brins multifilamentaires présente un titre égal à 220 tex. Dans d'autres variantes, on pourra utiliser des titres égaux à 144 tex ou 334 tex.

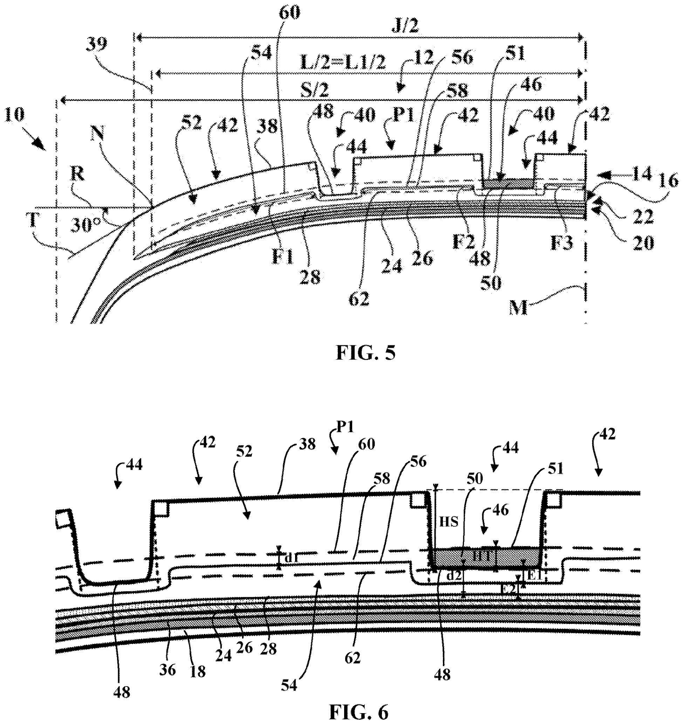

En référence à la figure 1, la bande de roulement 14 comprend une surface de roulement 38 par l'intermédiaire de laquelle la bande de roulement 14 entre en contact avec le sol. La bande de roulement 14 comprend également des découpures 40 et des blocs de sculpture 42, les découpures 40 séparant les blocs de sculptures 42 les uns des autres. Dans le plan de coupe méridienne de la figure 1, les découpures 40 comprennent plusieurs rainures circonférentielles 44 dont au moins une forme la découpure la plus profonde du pneumatique 10. La profondeur de cette rainure circonférentielle 44 la plus profonde définit, à l'état neuf, la hauteur de sculpture HS du pneumatique qui va de 5,0 à 9,0 mm, de préférence de 6,0 à 7,5 mm et ici HS=7,0 mm comme illustré sur la figure 6.

La surface de roulement 38 est destinée à entrer en contact avec le sol lors du roulage du pneumatique 10 sur le sol et est délimitée axialement par deux limites axiales 39 passant par chaque point N agencé de part et d'autre du plan médian M et pour lequel l'angle entre la tangente T à la surface de roulement 38 et une droite parallèle R à la direction axiale Y passant par ce point est égal à 30°.

La bande de roulement 14 comprend ici une portion axialement centrale P1 comprenant le plan médian du pneumatique 10 et ici centrée axialement sur le plan médian M du pneumatique 10. La portion axialement centrale P1 présente une largeur axiale L1 égale à au moins 70% de la largeur axiale L de la surface de roulement 38 et ici L1=L.

La bande de roulement 14 comprend également plusieurs témoins d'usure réglementaires 46 définissant un seuil d'usure réglementaire en-deçà duquel le pneumatique n'est plus conforme à la réglementation correspondante en termes d'usure. Le témoin d'usure 46 illustré sur les figures 1 et 3 à 6 est agencé au fond 48 de la découpure la plus profonde, ici au fond 48 d'une des rainures circonférentielles 44. En l'espèce, le témoin d'usure réglementaire 46 est formé par une protubérance 50 s'étendant radialement depuis le fond 48 de la rainure circonférentielle 44 radialement vers l'extérieur sur une hauteur radiale HT allant de 1,45 mm à 1,75 mm et ici sensiblement égale à 1,6 mm. Le témoin d'usure réglementaire 46 présente un point le plus radialement externe ici formé par la surface 51 radialement externe du témoin d'usure réglementaire 46.

Après usure jusqu'à une hauteur de sculpture égale à 2,0 mm, le taux d'entaillement surfacique du pneumatique va de 20% à 35%, de préférence de 22% à 30% et est ici égal à 25%.

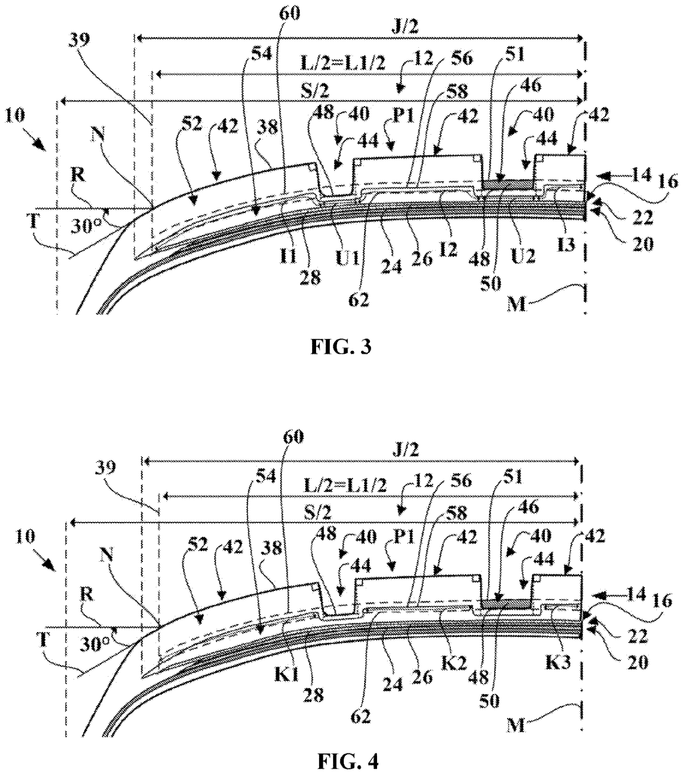

En référence aux figures 1 et 3, la bande de roulement 14 comprend une couche de roulement 52 portant la surface de roulement 38 ainsi qu'une couche de support 54 de la couche de roulement 52 agencée radialement à l'intérieur de la couche de roulement 52. Une telle couche de support 54 est généralement appelée sous-couche. La largeur axiale J de la couche de support 54 est supérieure ou égale à 90% de la largeur axiale L de la surface de roulement 38 et ici la largeur axiale J de la couche de support 54 est supérieure ou égale à 100% de la largeur axiale L de la surface de roulement 38 et ici égale à 105% de la largeur axiale L de la surface de roulement 38.

La couche de roulement 52 et la couche de support 54 sont jointives par l'intermédiaire d'une interface 56 décrivant, dans le plan de coupe méridienne de la figure 3 comprenant le témoin d'usure réglementaire 46, une trajectoire d'interface 58.

Toujours dans le plan de coupe méridienne de la figure 3, on définit, une trajectoire d'usure réglementaire 60 parallèle à la surface de roulement 38 du pneumatique 10 et passant par la surface radialement externe 51 du témoin d'usure réglementaire 46. Sur la figure 3, la trajectoire d'usure réglementaire 60 est représentée en traits pointillés.

En référence à la figure 3, dans la portion axialement centrale P1 de la bande de roulement 14, la trajectoire d'interface 58 présente une longueur l située à l'aplomb radial des blocs de sculpture 42, la longueur l étant égale à la somme des longueurs l1, l2, l3 situées à l'aplomb radial des blocs de sculpture 42, le reste de la longueur de la trajectoire d'interface 58 étant égale à la somme des longueurs U1 et U2 situées à l'aplomb radial des découpures 40, ici à l'aplomb radial des rainures circonférentielles 44. En l'espèce, la trajectoire d'interface présente, dans la moitié de la portion axialement centrale P1 de la bande de roulement 14, une longueur égale à la somme des longueurs l1, l2, l3, U1, U2 et égale à 8,13 cm avec l1=2,90 cm, l2=2,28 cm, l3=l2/2=1,14 cm, U1=0,65 cm et U2=1,16 cm

Dans la moitié de la portion axialement centrale P1 de la bande de roulement 14, au moins 75%, de préférence au moins 80% et encore plus préférentiellement 90% de la longueur l de la trajectoire d'interface 58 située à l'aplomb radial des blocs de sculpture 42, ici au moins 75%, de préférence au moins 80% et encore plus préférentiellement 90% de la longueur l, est agencée dans le plan de coupe méridienne de la figure 3, radialement à l'intérieur de la trajectoire d'usure réglementaire 60. En l'espèce, l'intégralité des longueurs l1, l2, l3 situées à l'aplomb radial des blocs de sculpture 42 sont situées radialement à l'intérieur de la trajectoire d'usure réglementaire 60 de sorte que 100% de la longueur l de la trajectoire d'interface 58 située à l'aplomb radial des blocs de sculpture 42est agencée dans le plan de coupe méridienne de la figure 3, radialement à l'intérieur de la trajectoire d'usure réglementaire 60.

En outre, dans la moitié de la portion axialement centrale P1 de la bande de roulement 14, au moins 75%, de préférence au moins 80% et encore plus préférentiellement 90% de la longueur de la trajectoire d'interface 58 située à l'aplomb radial des blocs de sculpture 42, ici au moins 75%, de préférence au moins 80% et encore plus préférentiellement 90% de la longueur l, est agencée dans le plan de coupe méridienne de la figure 4, à une distance radiale moyenne d1 inférieure ou égale à 2,0 mm, de préférence inférieure ou égale à 1,2 mm et plus préférentiellement inférieure ou égale à 1,0 mm de la trajectoire d'usure réglementaire 60. En l'espèce, les longueurs K1<l1, K2<l2, K3<l3 correspondent aux longueurs de la trajectoire d'interface 58 situées à une distance radiale moyenne d1 inférieure ou égale à 1,0 mm de la trajectoire d'usure réglementaire 60. On a ici K1=2,85 cm, K2=2,18 cm et K3=1,09 cm de sorte que 97% de la la longueur I est agencée, dans le plan de coupe méridienne de la figure 4, à une distance radiale moyenne d1 inférieure ou égale à 1,0 mm de la trajectoire d'usure réglementaire 60.

De plus, dans la moitié de la portion axialement centrale P1 de la bande de roulement 14, au moins 75%, de préférence au moins 80% et encore plus préférentiellement 90% de la longueur de la trajectoire d'interface 58 située à l'aplomb radial des blocs de sculpture 42, ici au moins 75%, de préférence au moins 80% et encore plus préférentiellement 90% de la longueur l, est agencée, dans le plan de coupe méridienne de la figure 4, à une distance radiale moyenne d1 supérieure ou égale à 0,4 mm, de préférence supérieure ou égale à 0,6 mm de la trajectoire d'usure réglementaire 60. En l'espèce, l'intégralité des longueurs l1, l2, l3 situées à l'aplomb radial des blocs de sculpture 42 est agencée à une distance radiale moyenne d1 supérieure ou égale à 0,6 mm de la trajectoire d'usure réglementaire 60 de sorte que 100% de la longueur l est agencée, dans le plan de coupe méridienne de la figure 4, à une distance radiale moyenne d1 supérieure ou égale à 0,6 mm de la trajectoire d'usure réglementaire 60.

Ainsi, la distance radiale entre la trajectoire d'usure réglementaire 60 et l'intégralité de la longueur l de la trajectoire d'interface 58 située à l'aplomb radial des blocs de sculpture 42 varie entre 0,8 mm et 2,65 mm. Si on se limite aux longueurs K1, K2, K3 situées à l'aplomb radial des blocs de sculpture 42, 97% de la longueur l de la trajectoire d'interface 58 située à l'aplomb radial des blocs de sculpture 42 est agencée, dans le plan de coupe méridienne de la figure 4, à une distance radiale comprise entre 0,6 mm et 1,0 mm de la trajectoire d'usure réglementaire 60 correspondant à une disance radiale moyenne d1 égale à 0,85 mm.

De plus, dans la moitié de la portion axialement centrale P1 de la bande de roulement 14, au moins 75%, de préférence au moins 80% et encore plus préférentiellement 90% de la longueur de la trajectoire d'interface 58 située à l'aplomb radial des blocs de sculpture 42, ici au moins 75%, de préférence au moins 80% et encore plus préférentiellement 90% de la longueur l, est agencée, dans le plan de coupe méridienne de la figure 5, radialement à l'extérieur d'une trajectoire 62 parallèle à la surface de roulement 38 du pneumatique 10 à l'état neuf et passant par le point le plus radialement interne de la découpure la plus profonde, ici passant par le fond 48 de chaque rainure circonférentielle 44. En l'espèce, les longueurs F1, F2, F3 telles que K1<F1<l1, K2<F2<l2, K3<F3<l3 correspondent aux longueurs de la trajectoire d'interface 58 agencées radialement à l'extérieur de la trajectoire 62. On a ici F1=2,86 cm, F2=2,20 cm et F3=1,10 cm de sorte que 97% de la la longueur l de la trajectoire d'interface 58 située à l'aplomb radial des blocs de sculpture 42 est agencée dans la moitié de la portion axialement centrale P1 de la bande de roulement 14, dans le plan de coupe méridienne de la figure 5, radialement à l'extérieur de la trajectoire 62.

En référence à la figure 6, dans la moitié de la portion axialement centrale P1 de la bande de roulement 14, la portion axiale de la bande de roulement 14 située à l'aplomb radial de la découpure la plus profonde, ici située à l'aplomb radial de chaque rainure circonférentielle 44 comprend une épaisseur radiale E1 non nulle de la couche de roulement 52 et une épaisseur radiale E2 non nulle de la couche de support 54. Le rapport E1/E2 varie entre 0,40 et 0,60 et est ici sensiblement égal à 0,50.

Toujours en référence à la figure 6, dans la moitié de la portion axialement centrale P1 de la bande de roulement 14, la distance moyenne d2 entre la couche comprenant des éléments de renforcement radialement la plus externe de l'armature de sommet 16, ici la couche de frettage 28 et le point le plus radialement interne de la découpure la plus profonde, ici le fond 48 de chaque rainure circonférentielle 44 est inférieure ou égale à 2,50 mm, de préférence inférieure ou égale à 2,25 mm et supérieure ou égale à 1,0 mm. En l'espèce, d2=2,10 mm.

On notera que le pneumatique étant symétrique par rapport au plan médian M, les calculs illustrés par les figures 1 et 3 à 6 représentant la moitié de coupe méridienne du pneumatique 10 et la moitié de la portion axialement centrale P1 sont également vrais pour une coupe méridienne entière du pneumatique 10 et la portion axialement centrale P1 en entier.

La couche de roulement 52 comprend un matériau élastomérique de roulement M1 et la couche de support 54 comprend un matériau élastomérique de support M2 différent du matériau élastomérique de roulement. En l'espèce, le matériau élastomérique de roulement est à base de la composition CD1 décrite dans WO2018115722 alors que le matériau élastomérique de support est à base de la composition CC1 décrite dans WO2018115722. D'autres compositions peuvent bien entendu être utilisées en faisant varier les taux des différents constituants des compositions et ce afin de d'obtenir des propriétés adaptées à des usages particuliers et ce, sans pour autant sortir du cadre de l'invention.

Le volume du matériau élastomérique de roulement M1 dans la partie centrale P1 est supérieur ou égal à 60%, de préférence supérieur ou égal à 65% et ici égal à 70% du volume de la partie centrale P1. Le volume du matériau élastomérique de support M2 dans la partie centrale P1 est inférieur ou égal à 40%, de préférence inférieur ou égal à 35% du volume de la partie centrale P1 et ici égal à 30%.

Le matériau élastomérique de roulement M1 présente un module complexe de cisaillement dynamique G*_1 mesuré à 10% de déformation selon la norme ASTM D-5992-96, à une température de 23°C et à une fréquence de 10Hz allant de 1,30 MPa à 4,10 MPa, et de préférence allant de 1,30 MPa à 3,00 MPa et ici G*_1=2,13 MPa.

Le matériau élastomérique de support M2 présente un module complexe de cisaillement dynamique G*_2 mesuré à 10% de déformation selon la norme ASTM D-5992-96, à une température de 23°C et à une fréquence de 10Hz supérieur ou égal à 2 MPa, de préférence allant de 2,00 à 4,10 MPa et plus préférentiellement allant de 2,15 à 3,50 MPa et ici G*_2=2,14 MPa.

On notera que G*_2 ≥ 0,90 x G*_1 et même que G*_2 ≥ 0,92 x G*_1, et même G*_2 ≥ G*_1 et ici G*_2>G*_1.

Le matériau élastomérique de roulement M1 présente une perte dynamique tanD0_1 mesurée selon la norme ASTM D-5992-96, à une température de 0°C et à une fréquence de 10Hz allant de 0,50 à 1,00 et plus préférentiellement allant de 0,50 à 0,85 et ici tanD0_1=0,67.

Le matériau élastomérique de support M2 présente une perte dynamique tanD0_2 mesurée selon la norme ASTM D-5992-96, à une température de 0°C et à une fréquence de 10Hz allant de 0,60 à 1,10 et plus préférentiellement allant de 0,60 à 1,00 et ici tanD0_2=0,65.

On notera que tanD0_2 ≥ 0,37 x tanD0_1 et même que tanD0_2 ≥ 0,5 tanD0_1, de préférence tanD0_2 ≥ 0,75 x tanD0_1. On notera que dans d'autres modes de réalisation très avantageux dans lesquels on modifie le matériau élastomérique de support M2 de façon à augmenter tanD0_2, on a préférentiellement tanD0_2 ≥ tanD0_1 et très avantageusement tanD0_2 > tanD0_1 et même tanD0_2 ≥ 1,10 x tanD0_1. Afin d'augmenter la valuer de tanD0_2, on pourra augmenter, comme cela est connu de l'homme du métier, la température de transition vitreuse du matériau élastomérique de support et/ou son taux de silice.

Parmi les autres propriétés des matériaux élastomériques M1 et M2, on notera que le matériau élastomérique de roulement M1 présente une perte dynamique tanDMAX23_1 mesurée selon la norme ASTM D-5992-96, à une température de 23°C et à une fréquence de 10Hz, allant de 0,13 à 0,70 et de préférence de 0,13 à 0,47 et ici égale à 0,25. On notera également que le matériau élastomérique de support M2 présente une perte dynamique tanDMAX23_2 mesurée selon la norme ASTM D-5992-96, à une température de 23°C et à une fréquence de 10Hz, allant de 0,13 à 0,53 et de préférence de 0,13 à 0,46 et ici égale à 0,31.

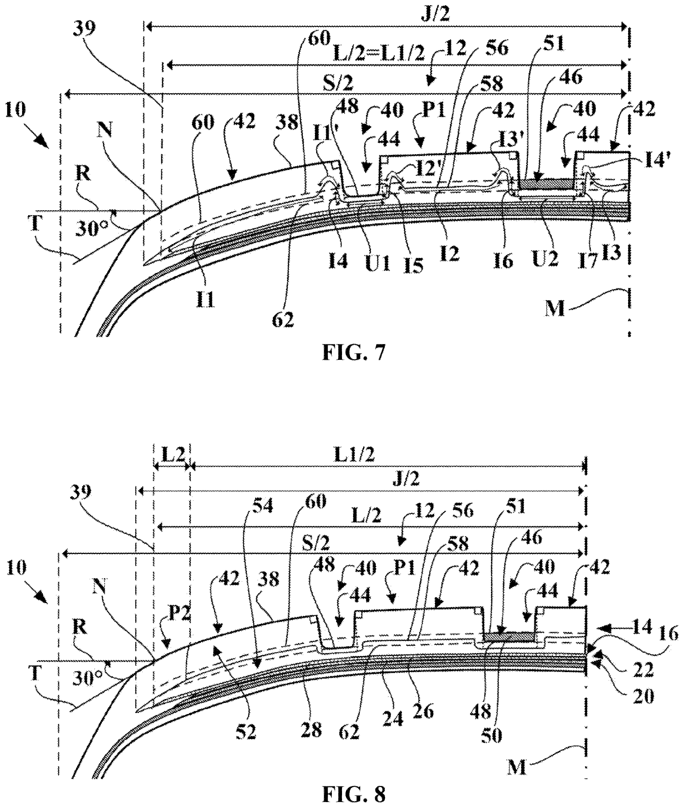

On a représenté sur la figure 7 un pneumatique selon un deuxième mode de réalisation. Les éléments analogues à ceux représentés sur les figures précédentes sont désignés par des références identiques.

A la différence du pneumatique selon le premier mode de réalisation, le pneumatique selon le deuxième mode de réalisation de la figure 7 présente, dans la portion axialement centrale P1 de la bande de roulement 14, des remontées de la couche de support 54 à proximité des découpures 40, ici des rainures circonférentielles 44, à l'aplomb de chaque bloc de sculpture 42. Ainsi, dans la portion axialement centrale P1 de la bande de roulement 14, au moins une longueur l' non nulle de la trajectoire d'interface 58 située à l'aplomb radial des blocs de sculpture 42 est agencée, dans le plan de coupe méridienne de la figure 7, radialement à l'extérieur de la trajectoire d'usure réglementaire 60. Ici l=l1+l2+l3+l4+l5+l6+l7+l', l'=l1'+l2'+l3'+l4' avec l1=2,44 cm, l2=1,64 cm, l3=l2/2=0,82 cm, l4=l5=l6=l7=0,25 cm, l1'=l2'=l3'=l4'=0,35 cm. Au plus 25% de la longueur totale l de la trajectoire l'interface 58 située à l'aplomb radial des blocs de sculpture 42 est agencée, dans le plan de coupe méridienne de la figure 7, radialement à l'extérieur de la trajectoire d'usure réglementaire 60 et ici l'/l=1,40/5,9=23%.

On a représenté sur la figure 8 un pneumatique selon un troisième mode de réalisation. Les éléments analogues à ceux représentés sur les figures précédentes sont désignés par des références identiques.

A la différence des modes de réalisation précédents, la portion axialement centrale P1 de la bande de roulement 14 présente une largeur axiale L1 strictement inférieure à la largeur axiale L de la surface de roulement 38 de sorte que la bande de roulement 14 comprend des portions axialement latérales P2 agencées axialement à l'extérieur de la portion axialement centrale P1. Chaque portion axialement latérale P2 présente une largeur axiale L2 au plus égale à 15% de la largeur axiale L de la bande de roulement et ici L2/(L1+L2)=4%. Dans le mode de réalisation de la figure 8, la couche de roulement 52 de chaque portion axialement latérale P2 comprend un matériau élastomérique différent du matériau élastomérique de la portion axialement centrale P1. Par exemple, on choisira un matériau élastomérique présentant une résistance au roulement relativement basse, par exemple comme cela est décrit dans WO2014/090845.

### ESSAIS COMPARATIFS

On a comparé le pneumatique 10 selon le premier mode de réalisation avec un pneumatique de l'état de la technique MICHELIN Primacy 4 de mêmes dimensions sur un test d'adhérence sur sol mouillé une fois la moitié du potentiel d'usure du pneumatique dépassé. Aux fins de comparaison, le matériau élastomérique de roulement du pneumatique de l'état de la technique MICHELIN Primacy 4 est identique au matériau élastomérique M1 du pneumatique 10 selon le premier mode de réalisation. Le matériau élastomérique de support du pneumatique de l'état de la technique MICHELIN Primacy 4 présente :
- un module complexe de cisaillement dynamique G*_2T mesuré à 10% de déformation selon la norme ASTM D-5992-96, à une température de 23°C égal à 1,90 MPa, et
- une perte dynamique tanD0_2T mesurée selon la norme ASTM D-5992-96, à une température de 0°C et à une fréquence de 10Hz égale à 0,23.

Tout d'abord, on a raboté chaque pneumatique jusqu'à atteindre une hauteur de sculpture égale à 2 mm pour simuler une utilisation de plus de la moitié et ici de 93% de son potentiel d'usure. La hauteur de sculpture est définie comme étant la hauteur radiale entre le point radialement le plus interne de la ou chaque découpure la plus profonde et son projeté sur le sol lors du roulage du pneumatique. Cette hauteur de sculpture est telle que la trajectoire d'usure règlementaire n'est pas atteinte, cette dernière correspondant à une hauteur de sculpture égale à 1,6 mm et est représentative d'un état d'usure avancé du pneumatique, en l'espèce au-delà de la moitié de son potentiel d'usure (ici 93% du potentiel d'usure a été consommé). Le rabotage a été effectué de façon connue par l'homme du métier sur une machine de roulage munie d'une tête de rabotage au contact de laquelle on fait rouler le pneumatique dans des conditions de roulage représentatives des conditions de roulage normales.

A l'issue de cette étape de rabotage, on a testé dans des conditions identiques sur un même véhicule quatre pneumatiques MICHELIN Primacy 4 rabotés et quatre pneumatiques 10 selon l'invention rabotés afin de déterminer la décélération moyenne d'un véhicule équipé de ces pneumatiques entre 80 km/h et 20 km/h. Ce test a été mené en utilisant les préconisations de la norme ISO 23671-2006 et permettant de déterminer un coefficient BFCT de force de freinage pour le pneumatique de l'état de la technique MICHELIN Primacy 4 ainsi qu'un coefficient BFCA de force de freinage pour le pneumatique 10 selon l'invention. Plus le coefficient de force de freinage est élevé, meilleure est la performance du pneumatique testé. Les résultats du test sont tels que BFCA/BFCT=106 ce qui démontre une performance de freinage sur sol mouillé améliorée du pneumatique selon l'invention par rapport au pneumatique de l'état de la technique.

L'invention ne se limite pas aux modes de réalisation précédemment décrits.

## Revendications

1. Pneumatique (10) pour véhicule de tourisme comprenant une bande de roulement (14) comprenant des découpures (40) et des blocs de sculpture (42), les découpures (40) séparant les blocs de sculptures (42) les uns des autres, la bande de roulement (14) étant destinée à entrer en contact avec le sol lors d'un roulage du pneumatique (10) par l'intermédiaire d'une surface de roulement (38), la bande de roulement (14) comprenant au moins un témoin d'usure réglementaire (46) définissant un seuil d'usure réglementaire, et
dans une portion (P1) axialement centrale de la bande de roulement (14) présentant une largeur axiale (L1) égale à au moins 70% de la largeur (L) de la surface de roulement (38), la bande de roulement (14) comprend :
- une couche de roulement (52) portant la surface de roulement (38), la couche de roulement (52) comprenant un matériau élastomérique de roulement présentant :
- un module complexe de cisaillement dynamique G*_1 mesuré à 10% de déformation selon la norme ASTM D-5992-96, à une température de 23°C et à une fréquence de 10Hz, et
- une perte dynamique tanD0_1 mesurée selon la norme ASTM D-5992-96, à une température de 0°C et à une fréquence de 10Hz,
- une couche de support (54) de la couche de roulement (52) agencée radialement à l'intérieur de la couche de roulement (52), la couche de support (54) comprenant un matériau élastomérique de support présentant :
- un module complexe de cisaillement dynamique G*_2 mesuré à 10% de déformation selon la norme ASTM D-5992-96, à une température de 23°C et à une fréquence de 10Hz, et
- une perte dynamique tanD0_2 mesurée selon la norme ASTM D-5992-96, à une température de 0°C et à une fréquence de 10Hz,
le matériau élastomérique de roulement étant différent du matériau élastomérique de support de sorte que la couche de roulement (52) et la couche de support (54) sont jointives par l'intermédiaire d'une interface (56) décrivant, dans un plan de coupe méridienne comprenant le témoin d'usure réglementaire (46), une trajectoire d'interface (58),
dans la portion (P1) axialement centrale de la bande de roulement (14), en définissant, dans le plan de coupe méridienne, une trajectoire d'usure réglementaire (60) parallèle à la surface de roulement (38) du pneumatique (10) à l'état neuf et passant par le point (51) le plus radialement externe du témoin d'usure réglementaire (46), au moins 75% de la longueur (l) de la trajectoire d'interface (58) située à l'aplomb radial des blocs de sculpture (42) étant agencée, dans le plan de coupe méridienne, radialement à l'intérieur de la trajectoire d'usure réglementaire (60), et
dans la portion (P1) axialement centrale de la bande de roulement (14) au moins 75% de la longueur (l) de la trajectoire d'interface (58) située à l'aplomb radial des blocs de sculpture (42) étant agencée, dans le plan de coupe méridienne, à une distance radiale moyenne (d1) inférieure ou égale à 2,0 mm de la trajectoire d'usure réglementaire (60), **caractérisé en ce que** tanD0_2 ≥ 0,37 x tanD0_1 et G*_2 ≥ 0,90 x G*_1.

2. Pneumatique (10) selon la revendication précédente, dans lequel tanD0_2 ≥ 0,5 x tanD0_1, de préférence tanD0_2 ≥ 0,75 x tanD0_1, plus préférentiellement tanD0_2 ≥ tanD0_1, encore plus préférentiellement tanD0_2 > tanD0_1 et très préférentiellement tanD0_2 ≥ 1,10 x tanD0_1.

3. Pneumatique (10) selon l'une quelconque des revendications précédentes, dans lequel G*_2 ≥ 0,92 x G*_1, de préférence G*_2 ≥ G*_1, et plus préférentiellement G*_2 > G*_1.

4. Pneumatique (10) selon l'une quelconque des revendications précédentes, dans lequel, dans la portion (P1) axialement centrale de la bande de roulement (14), au moins 75% de la longueur (l) de la trajectoire d'interface (58) située à l'aplomb radial des blocs de sculpture (42) est agencée, dans le plan de coupe méridienne, radialement à l'extérieur d'une trajectoire (62) parallèle à la surface de roulement (38) du pneumatique (10) à l'état neuf et passant par le point (48) le plus radialement interne de la ou de chaque découpure (44) la plus profonde.

5. Pneumatique (10) selon l'une quelconque des revendications précédentes, dans lequel, dans la portion (P1) axialement centrale de la bande de roulement (14), au moins 75% de la longueur (l) de la trajectoire d'interface (58) située à l'aplomb radial des blocs de sculpture (42) est agencée, dans le plan de coupe méridienne, à une distance radiale moyenne (d1) supérieure ou égale à 0,4 mm, de préférence supérieure ou égale à 0,6 mm de la trajectoire d'usure réglementaire (60).

6. Pneumatique (10) selon l'une quelconque des revendications précédentes, dans lequel, dans la portion (P1) axialement centrale de la bande de roulement (14), au moins une longueur (I') non nulle de la trajectoire d'interface (58) située à l'aplomb radial des blocs de sculpture (42) est agencée, dans le plan de coupe méridienne, radialement à l'extérieur de la trajectoire d'usure réglementaire (60).

7. Pneumatique (10) selon l'une quelconque des revendications précédentes, dans lequel tanD0_1 va de 0,50 à 1,00 et plus préférentiellement va de 0,50 à 0,85.

8. Pneumatique (10) selon l'une quelconque des revendications précédentes, dans lequel tanD0_2 va de 0,60 à 1,10 et plus préférentiellement va de 0,60 à 1,00 .

9. Pneumatique (10) selon l'une quelconque des revendications précédentes, dans lequel G*_1 va de 1,30 MPa à 4,10 MPa, et de préférence va de 1,30 MPa à 3,00 MPa.

10. Pneumatique (10) selon l'une quelconque des revendications précédentes, dans lequel G*_2 est supérieur ou égal à 2,00 MPa, de préférence va de 2,00 à 4,10 MPa et plus préférentiellement va de 2,15 à 3,50 MPa.

11. Pneumatique (10) selon l'une quelconque des revendications précédentes, comprenant un sommet (12) comprenant une armature de sommet (16) agencée radialement à l'intérieur de la bande de roulement (14), et dans lequel, dans la portion (P1) axialement centrale de la bande de roulement (14), la distance moyenne (d2) entre la couche (28) comprenant des éléments de renforcement (280) radialement la plus externe de l'armature de sommet (16) et le point le plus radialement interne (48) de la ou de chaque découpure la plus profonde (44) est inférieure ou égale à 2,50 mm, de préférence inférieure ou égale à 2,25 mm.

12. Pneumatique (10) selon l'une quelconque des revendications précédentes, comprenant un sommet (12) comprenant une armature de sommet (16) agencée radialement à l'intérieur de la bande de roulement (14), et dans lequel, dans la portion (P1) axialement centrale de la bande de roulement (14), la distance moyenne (d2) entre la couche (28) comprenant des éléments de renforcement (280) radialement la plus externe de l'armature de sommet (16) et le point le plus radialement interne (48) de la ou de chaque découpure la plus profonde (44) est supérieure ou égale à 1,0 mm.

13. Pneumatique (10) selon l'une quelconque des revendications précédentes, dans lequel le matériau élastomérique de roulement présente une perte dynamique tanDMAX23_1 mesurée selon la norme ASTM D-5992-96, à une température de 23°C et à une fréquence de 10Hz, allant de 0,13 à 0,70 et de préférence de 0,13 à 0,47.

14. Pneumatique (10) selon l'une quelconque des revendications précédentes, dans lequel le matériau élastomérique de support présente une perte dynamique tanDMAX23_2 mesurée selon la norme ASTM D-5992-96, à une température de 23°C et à une fréquence de 10Hz, allant de 0,13 à 0,53 et de préférence de 0,13 à 0,46.

15. Pneumatique (10) selon l'une quelconque des revendications précédentes, dans lequel le taux d'entaillement surfacique du pneumatique (10) présentant une hauteur de sculpture (HS) égale à 2,0 mm après usure va de 20% à 35%, de préférence de 22% à 30%, le taux d'entaillement surfacique du pneumatique étant le rapport de :
- la différence entre l'aire totale de l'empreinte de contact de la bande de roulement du pneumatique gonflé à pression nominale et sous une charge nominale avec un sol de roulage lisse et l'aire de contact des éléments de la bande de roulement avec le sol de roulage et
- l'aire totale de l'empreinte de contact de la bande de roulement du pneumatique gonflé à pression nominale et sous une charge nominale avec le sol de roulage lisse, la charge nominale étant égale à 80% de la capacité de charge de la norme de la European Tyre and Rim Technical Organisation, 2019 et la pression nominale étant égale à 2,5 bars.

## Patentansprüche

1. Reifen (10) für ein Personenfahrzeug, beinhaltend einen Laufstreifen (14), der Ausschnitte (40) und Profilblöcke (42) beinhaltet, wobei die Ausschnitte (40) die Profilblöcke (42) voneinander trennen, wobei der Laufstreifen (14) dazu bestimmt ist, beim Rollen des Reifens (10) mittels einer Laufoberfläche (38) mit dem Boden in Kontakt zu kommen, wobei der Laufstreifen (14) mindestens einen vorschriftsmäßigen Verschleißanzeiger (46) beinhaltet, der eine vorschriftsmäßige Verschleißschwelle definiert, und
wobei in einem axial mittleren Abschnitt (P1) des Laufstreifens (14), der eine axiale Breite (L1) von mindestens 70 % der Breite (L) der Laufoberfläche (38) aufweist, der Laufstreifen (14) Folgendes beinhaltet:
- eine Laufschicht (52), die die Laufoberfläche (38) trägt, wobei die Laufschicht (52) ein elastomeres Laufmaterial beinhaltet, das Folgendes aufweist:
- einen komplexen dynamischen Schubmodul G*_1, gemessen bei 10 % Verformung gemäß der Norm ASTM D-5992-96, bei einer Temperatur von 23 °C und einer Frequenz von 10 Hz und
- einen dynamischen Verlustfaktor tanD0_1, gemessen gemäß der Norm ASTM D-5992-96, bei einer Temperatur von 0 °C und einer Frequenz von 10 Hz,
- eine Stützschicht (54) für die Laufschicht (52), die zu der Laufschicht (52) radial innenliegend angeordnet ist, wobei die Stützschicht (54) eine elastomeres Stützmaterial beinhaltet, das Folgendes aufweist:
- einen komplexen dynamischen Schubmodul G*_2, gemessen bei 10 % Verformung gemäß der Norm ASTM D-5992-96, bei einer Temperatur von 23 °C und einer Frequenz von 10 Hz und
- einen dynamischen Verlustfaktor tanD0_2, gemessen gemäß der Norm ASTM D-5992-96, bei einer Temperatur von 0 °C und einer Frequenz von 10 Hz,
wobei sich das elastomere Laufmaterial und das elastomere Stützmaterial voneinander unterscheiden, sodass die Laufschicht (52) und die Stützschicht (54) mittels einer Grenzfläche (56) aneinander grenzen, welche in einer Meridianschnittebene, die den vorschriftsmäßigen Verschleißanzeiger (46) beinhaltet, einen Grenzflächenverlauf (58) beschreibt,
wobei in dem axial mittleren Abschnitt (P1) des Laufstreifens (14),
wenn man in der Meridianschnittebene einen vorschriftsmäßigen Verschleißverlauf (60) definiert, der zu der Laufoberfläche (38) des Reifens (10) im Neuzustand parallel ist und durch den radial am weitesten außenliegenden Punkt (51) des vorschriftsmäßigen Verschleißanzeigers (46) verläuft, mindestens 75 % der Länge (I) des Grenzflächenverlaufs (58), der sich radial direkt unter den Profilblöcken (42) befindet, in der Meridianschnittebene zu dem vorschriftsmäßigen Verschleißverlauf (60) radial innenliegend angeordnet ist und
wobei in dem axial mittleren Abschnitt (P1) des Laufstreifens (14) mindestens 75 % der Länge (I) des Grenzflächenverlaufs (58), der sich radial direkt unter den Profilblöcken (42) befindet, in der Meridianschnittebene mit einem mittleren radialen Abstand (d1) kleiner als oder gleich 2,0 mm zu dem vorschriftsmäßigen Verschleißverlauf (60) angeordnet ist, **dadurch gekennzeichnet, dass** tanD0_2 ≥ 0,37 x tanD0_1 und G*_2 ≥ 0,90 x G*_1.

2. Reifen (10) nach dem vorhergehenden Anspruch, wobei tanD0_2 ≥ 0,5 x tanD0_1, vorzugsweise tanD0_2 ≥ 0,75 x tanD0_1, bevorzugter tanD0_2 ≥ tanD0_1, noch bevorzugter tanD0_2 > tanD0_1 und sogar noch bevorzugter tanD0_2 ≥ 1,10 x tanD0_1.

3. Reifen (10) nach einem beliebigen der vorhergehenden Ansprüche, wobei G*_2 ≥ 0,92 x G*_1, vorzugsweise G*_2 ≥ G*_1 und bevorzugter G*_2 > G*_1.

4. Reifen (10) nach einem beliebigen der vorhergehenden Ansprüche, wobei in dem axial mittleren Abschnitt (P1) des Laufstreifens (14) mindestens 75 % der Länge (I) des Grenzflächenverlaufs (58), der sich radial direkt unter den Profilblöcken (42) befindet, in der Meridianschnittebene zu einem Verlauf (62), der zu der Laufoberfläche (38) des Reifens (10) im Neuzustand parallel ist und durch den radial am weitesten innenliegenden Punkt (48) des oder jedes tiefsten Ausschnitts (44) verläuft, radial außenliegend angeordnet ist.

5. Reifen (10) nach einem beliebigen der vorhergehenden Ansprüche, wobei in dem axial mittleren Abschnitt (P1) des Laufstreifens (14) mindestens 75 % der Länge (I) des Grenzflächenverlaufs (58), der sich radial direkt unter den Profilblöcken (42) befindet, in der Meridianschnittebene mit einem mittleren radialen Abstand (d1) größer als oder gleich 0,4 mm, vorzugsweise größer als oder gleich 0,6 mm, zu dem vorschriftsmäßigen Verschleißverlauf (60) angeordnet ist.

6. Reifen (10) nach einem beliebigen der vorhergehenden Ansprüche, wobei in dem axial mittleren Abschnitt (P1) des Laufstreifens (14) mindestens eine Länge (I') ungleich null des Grenzflächenverlaufs (58), der sich radial direkt unter den Profilblöcken (42) befindet, in der Meridianschnittebene zu dem vorschriftsmäßigen Verschleißverlauf (60) radial außenliegend angeordnet ist.

7. Reifen (10) nach einem beliebigen der vorhergehenden Ansprüche, wobei tanD0_1 von 0,50 bis 1,00 reicht und bevorzugter von 0,50 bis 0,85 reicht.

8. Reifen (10) nach einem beliebigen der vorhergehenden Ansprüche, wobei tanD0_2 von 0,60 bis 1,10 reicht und bevorzugter von 0,60 bis 1,00 reicht.

9. Reifen (10) nach einem beliebigen der vorhergehenden Ansprüche, wobei G*_1 von 1,30 MPa bis 4,10 MPa reicht und bevorzugter von 1,30 MPa bis 3,00 MPa reicht.

10. Reifen (10) nach einem beliebigen der vorhergehenden Ansprüche, wobei G*_2 größer als oder gleich 2,00 MPa ist, vorzugsweise von 2,00 bis 4,10 MPa reicht und bevorzugter von 2,15 bis 3,50 MPa reicht.

11. Reifen (10) nach einem beliebigen der vorhergehenden Ansprüche, der einen Gürtel (12) beinhaltet, der eine Gürtelbewehrung (16) beinhaltet, die zu dem Laufstreifen (14) radial innenliegend angeordnet ist, und wobei in dem axial mittleren Abschnitt (P1) des Laufstreifens (14) der mittlere Abstand (d2) zwischen der radial am weitesten außenliegenden Schicht (28) der Gürtelbewehrung (16), die Verstärkungselemente (280) beinhaltet, und dem radial am weitesten innenliegenden Punkt (48) des oder jedes tiefsten Ausschnitts (44) kleiner als oder gleich 2,50 mm, vorzugsweise kleiner als oder gleich 2,25 mm ist.

12. Reifen (10) nach einem beliebigen der vorhergehenden Ansprüche, der einen Gürtel (12) beinhaltet, der eine Gürtelbewehrung (16) beinhaltet, die zu dem Laufstreifen (14) radial innenliegend angeordnet ist, und wobei in dem axial mittleren Abschnitt (P1) des Laufstreifens (14) der mittlere Abstand (d2) zwischen der radial am weitesten außenliegenden Schicht (28) der Gürtelbewehrung (16), die Verstärkungselemente (280) beinhaltet, und dem radial am weitesten innenliegenden Punkt (48) des oder jedes tiefsten Ausschnitts (44) größer als oder gleich 1,0 mm ist.

13. Reifen (10) nach einem beliebigen der vorhergehenden Ansprüche, wobei das elastomere Laufmaterial einen dynamischen Verlustfaktor tanDMAX23_1, gemessen gemäß der Norm ASTM D-5992-96, bei einer Temperatur von 23 °C und einer Frequenz von 10 Hz aufweist, der von 0,13 bis 0,70 und vorzugsweise von 0,13 bis 0,47 reicht.

14. Reifen (10) nach einem beliebigen der vorhergehenden Ansprüche, wobei das elastomere Stützmaterial einen dynamischen Verlustfaktor tanDMAX23_2, gemessen gemäß der Norm ASTM D-5992-96, bei einer Temperatur von 23 °C und einer Frequenz von 10 Hz aufweist, der von 0,13 bis 0,53 und vorzugsweise von 0,13 bis 0,46 reicht.

15. Reifen (10) nach einem beliebigen der vorhergehenden Ansprüche, wobei der oberflächenbezogene Negativprofilanteil des Reifens (10), der eine Profilhöhe (HS) von 2,0 mm nach Verschleiß aufweist, von 20 % bis 35 %, vorzugsweise von 22 % bis 30 % reicht, wobei der oberflächenbezogene Negativprofilanteil des Reifens das Verhältnis zwischen Folgendem ist:
- der Differenz zwischen der Gesamtfläche des Kontaktabdrucks des Laufstreifens des auf Nenndruck aufgepumpten Reifens unter Nennlast bei glattem Rollboden und der Kontaktfläche der Elemente des Laufstreifens mit dem Rollboden und
- der Gesamtfläche des Kontaktabdrucks des Laufstreifens des auf Nenndruck aufgepumpten Reifens unter Nennlast bei glattem Rollboden, wobei die Nennlast 80 % der Tragfähigkeit der Norm der European Tyre and Rim Technical Organisation, 2019, beträgt und der Nenndruck 2,5 bar beträgt.

## Claims

1. Tyre (10) for a passenger vehicle, comprising a tread (14) comprising cuts (40) and tread pattern blocks (42), the cuts (40) separating the tread pattern blocks (42) from one another, the tread (14) being intended to come into contact with the ground when the tyre (10) is running via a tread surface (38), the tread (14) comprising at least one regulation wear indicator (46) defining a regulation wear threshold, and,
in an axially central portion (P1) of the tread (14) having an axial width (L1) equal to at least 70% of the width (L) of the tread surface (38), the tread (14) comprises:
- a tread layer (52) bearing the tread surface (38), the tread layer (52) comprising an elastomeric tread material exhibiting:
- a complex dynamic shear modulus G*_1, measured at 10% strain in accordance with the standard ASTM D-5992-96, at a temperature of 23°C and a frequency of 10 Hz, and
- a dynamic loss tanD0_1, measured in accordance with the standard ASTM D-5992-96, at a temperature of 0°C and a frequency of 10 Hz,
- a backing layer (54) for the tread layer (52) arranged radially on the inside of the tread layer (52), the backing layer (54) comprising an elastomeric backing material exhibiting:
- a complex dynamic shear modulus G*_2, measured at 10% strain in accordance with the standard ASTM D-5992-96, at a temperature of 23°C and a frequency of 10 Hz, and
- a dynamic loss tanD0_2, measured in accordance with the standard ASTM D-5992-96, at a temperature of 0°C and a frequency of 10 Hz,
the elastomeric tread material being different from the elastomeric backing material such that the tread layer (52) and the backing layer (54) are contiguous via an interface (56) describing an interface trajectory (58) in a meridian section plane comprising the regulation wear indicator (46),
**characterized in that** tanD0_2 ≥ 0.37 x tanD0_1 and G*_2 ≥ 0.90 x G*_1,
**in that,** in the axially central portion (P1) of the tread (14), by defining, in the meridian section plane, a regulation wear trajectory (60) that is parallel to the tread surface (38) of the tyre (10) when new and passes through the radially outermost point (51) of the regulation wear indicator (46), at least 75% of the length (l) of the interface trajectory (58) located radially below the tread pattern blocks (42) is arranged, in the meridian section plane, radially on the inside of the regulation wear trajectory (60), and
**in that,** in the axially central portion (P1) of the tread (14), at least 75% of the length (l) of the interface trajectory (58) located radially below the tread pattern blocks (42) is arranged, in the meridian section plane, at a mean radial distance (d1) less than or equal to 2.0 mm from the regulation wear trajectory (60).

2. Tyre (10) according to the preceding claim, wherein tanD0_2 ≥ 0.5 x tanD0_1, preferably tanD0_2 ≥ 0.75 x tanD0_1, more preferentially tanD0_2 ≥ tanD0_1, more preferentially still tanD0_2 > tanD0_1, and very preferentially tanD0_2 ≥ 1.10 x tanD0_1.

3. Tyre (10) according to either one of the preceding claims, wherein G*_2 ≥ 0.92 x G*_1, preferably G*_2 ≥ G*_1, and more preferentially G*_2 > G*_1.

4. Tyre (10) according to any one of the preceding claims, wherein, in the axially central portion (P1) of the tread (14), at least 75% of the length (l) of the interface trajectory (58) located radially below the tread pattern blocks (42) is arranged, in the meridian section plane, radially on the outside of a trajectory (62) which is parallel to the tread surface (38) of the tyre (10) when new and passes through the radially innermost point (48) of the or each deepest cut (44).

5. Tyre (10) according to any one of the preceding claims, wherein, in the axially central portion (P1) of the tread (14), at least 75% of the length (l) of the interface trajectory (58) located radially below the tread pattern blocks (42) is arranged, in the meridian section plane, at a mean radial distance (d1) less than or equal to 0.4 mm, preferably greater than or equal to 0.6 mm, from the regulation wear trajectory (60).

6. Tyre (10) according to any one of the preceding claims, wherein, in the axially central portion (P1) of the tread (14), at least a non-zero length (I') of the interface trajectory (58) located radially below the tread pattern blocks (42) is arranged, in the meridian section plane, radially on the outside of the regulation wear trajectory (60).

7. Tyre (10) according to any one of the preceding claims, wherein tanD0_1 ranges from 0.50 to 1.00 and more preferentially ranges from 0.50 to 0.85.

8. Tyre (10) according to any one of the preceding claims, wherein tanD0_2 ranges from 0.60 to 1.10 and more preferentially ranges from 0.60 to 1.00.

9. Tyre (10) according to any one of the preceding claims, wherein G*_1 ranges from 1.30 MPa to 4.10 MPa, and preferably ranges from 1.30 MPa to 3.00 MPa.

10. Tyre (10) according to any one of the preceding claims, wherein G*_2 is greater than or equal to 2.00MPa, preferably ranges from 2.00 to 4.10 MPa and more preferentially ranges from 2.15 to 3.50 MPa.

11. Tyre (10) according to any one of the preceding claims, comprising a crown (12) comprising a crown reinforcement (16) arranged radially on the inside of the tread (14), and wherein, in the axially central portion (P1) of the tread (14), the mean distance (d2) between the layer (28) comprising the radially outermost reinforcing elements (280) of the crown reinforcement (16) and the radially innermost point (48) of the or each deepest cut (44) is less than or equal to 2.50 mm, preferably less than or equal to 2.25 mm.

12. Tyre (10) according to any one of the preceding claims, comprising a crown (12) comprising a crown reinforcement (16) arranged radially on the inside of the tread (14), and wherein, in the axially central portion (P1) of the tread (14), the mean distance (d2) between the layer (28) comprising the radially outermost reinforcing elements (280) of the crown reinforcement (16) and the radially innermost point (48) of the or each deepest cut (44) is greater than or equal to 1.0 mm.

13. Tyre (10) according to any one of the preceding claims, wherein the elastomeric tread material exhibits a dynamic loss tanDMAX23_1, measured in accordance with the standard ASTM D-5992-96, at a temperature of 23°C and a frequency of 10 Hz, ranging from 0.13 to 0.70 and preferably from 0.13 to 0.47.

14. Tyre (10) according to any one of the preceding claims, wherein the elastomeric backing material exhibits a dynamic loss tanDMAX23_2, measured in accordance with the standard ASTM D-5992-96, at a temperature of 23°C and a frequency of 10 Hz, ranging from 0.13 à 0.53 and preferably from 0.13 to 0.46.

15. Tyre (10) according to any one of the preceding claims, wherein the surface-area void ratio of the tyre (10) exhibiting a tread pattern height (HS) equal to 2.0 mm after wear ranges from 20% to 35%, preferably from 22% to 30%, the surface-area void ratio of the tyre is the ratio of:
- the difference between the total surface area AT of the contact patch of the tread of the tyre inflated to nominal pressure and under nominal load over which the tyre is in contact with smooth ground and the surface area of elements of the tread that make contact with the ground on which the tyre runs, and
- the total surface area of the contact patch of the tread of the tyre inflated to nominal pressure and under nominal load over which the tyre is in contact with smooth ground, the nominal load being equal to 80% of the load rating given by the European Tyre and Rim Technical Organization standard of 2019, and the nominal pressure being equal to 2.5 bar.
